# EUROPEAN PATENT APPLICATION

(11) **EP 2 579 550 A1**
(43) Date of publication of application: **10.04.2013**
(21) Application number: 11184821.4
(22) Date of filing: 12.10.2011
(51) Int. Cl.: H04M 1/02, G08B 6/00

(54) **Method and apparatus pertaining to automatically moving a component that comprises a part of a portable electronic device**

(30) Priority: 03.10.2011 US 201113251771
(71) Applicant: Research In Motion Limited, Waterloo, ON N2L 3W8 (CA)
(72) Inventor: Kumar, Surender, Rolling Meadows, IL Illinois 60008 (US); Jano, Bashar, Rolling Meadows, IL Illinois 60008 (US); Griffin, Jason Tyler, Waterloo, Ontario N2L 3W8 (CA); Lukasik, Susan Lucille, Rolling Meadows, IL Illinois 60008 (US)
(74) Representative: Hibbert, Juliet Jane Grace

(57) **Abstract**

A portable electronic device detects a trigger event and responds by automatically moving a component that comprises a part of the portable electronic device. Examples of trigger events include but are not limited to receiving a communication (such as a wireless communication), receiving an input from a user interface, the occurrence of a time-based event, and so forth. The movement can comprise articulation-based movement (including but not limited to pivoting, rotating, sliding, bending, telescoping, elongating, realigning, or separating, to note but a few examples in these regards). These teachings will accommodate determining a present suitability of so moving the component, and not moving the component when such movement is not suitable at a time of determining the suitability. Such a determination can precede the movement and/or can occur during the course of the movement as desired.

## Description

### Related Applications

This application is related to co-pending and co-owned U.S. patent application number 13/251,868 (attorney's docket number 9169-99195-US (40594-ID)), titled METHOD AND APPARATUS PERTAINING TO AUTOMATED CONFIGURATION OF A DEPLOYABLE-COMPONENT'S USER INTERFACE and filed on October 3, 2011, which is incorporated by reference in its entirety herein.

This application is related to co-pending and co-owned U.S. patent application number 13/251,848 (attorney's docket number 9169-99086-US (39456-ID)), titled METHOD AND APPARATUS PERTAINING TO AUTOMATICALLY PERFORMING AN APPLICATION FUNCTION OF AN ELECTRONIC DEVICE BASED UPON DETECTING A CHANGE IN PHYSICAL CONFIGURATION OF THE DEVICE and filed on October 3, 2011, which is incorporated by reference in its entirety herein.

This application is related to co-pending and co-owned U.S. patent application number 13/251,799 (attorney's docket number 9169-99084-US (39461 + 39463-ID)), titled METHOD AND APPARATUS PERTAINING TO RESPONSIVELY CHANGING APPLICATION FUNCTIONALITY OF AN ELECTRONIC DEVICE and filed on October 3, 2011, which is incorporated by reference in its entirety herein.

This application is related to co-pending and co-owned U.S. patent application number 13/251,833 (attorney's docket number 9169-99085-US (39464-ID)), titled METHOD AND APPARATUS PERTAINING TO AUTOMATED FUNCTIONALITY BASED UPON DETECTED INTERACTION BETWEEN DEVICES and filed on October 3, 2011, which is incorporated by reference in its entirety herein.

### Technical Field

This disclosed concept relates generally to electronic devices, including but not limited to, electronic devices that operate in conjunction with one or more components that may be physically movable.

### Background

Electronic devices of various kinds are known in the art. Many such devices are relatively small and are intended to be readily carried on the person. Examples of electronic devices include, but are certainly not limited to, gaming devices, media players, portable communication devices including smartphones, personal digital assistants, electronic pads, tablets, laptop computers, electronic messaging devices, and so forth.

Consumer tastes have favored miniaturization and many such electronic devices evidence ever-smaller dimensions over time. The user's need to interact with such a device, however, often imposes a corresponding conundrum. The smaller the device, for example, the smaller the display area. Small displays, in turn, can challenge the user to glean the displayed content. Small form factors can also make it difficult for a user to provide instructions or to input data into such a device as the small form factor can make it difficult to provide, for example, an alphanumeric character entry mechanism that is reliable, comfortable, and accurate while also serving to leverage data-entry skills that the user may already posses.

### Brief Description of the Drawings

FIG. 1-1, FIG. 1-2, FIG.1-3, FIG. 1-4, FIG. 1-5, and FIG. 1-6 comprise representations as configured in accordance with various aspects of the disclosed concept;

FIG. 2 comprises a perspective depiction as configured in accordance with various aspects of the disclosed concept;

FIG. 3 comprises a perspective depiction as configured in accordance with various aspects of the disclosed concept;

FIG. 4-1 and FIG. 4-2 comprise representations as configured in accordance with various aspects of the disclosed concept;

FIG. 5 comprises a top-plan depiction as configured in accordance with various aspects of the disclosed concept;

FIG. 6 comprises a top-plan depiction as configured in accordance with various aspects of the disclosed concept;

FIG. 7 comprises a perspective depiction as configured in accordance with various aspects of the disclosed concept;

FIG. 8 comprises a perspective depiction as configured in accordance with various aspects of the disclosed concept;

FIG. 9 comprises a perspective detail depiction as configured in accordance with various aspects of the disclosed concept;

FIG. 10 comprises a block diagram as configured in accordance with various aspects of the disclosed concept;

FIG. 11-1 and 11-2 comprise block diagrams as configured in accordance with various aspects of the disclosed concept;

FIG. 12 comprises a flow diagram as configured in accordance with various aspects of the disclosed concept;

FIG. 13 comprises a flow diagram as configured in accordance with various aspects of the disclosed concept;

FIG. 14 comprises a flow diagram as configured in accordance with various aspects of the disclosed concept;

FIG. 15 comprises a flow diagram as configured in accordance with various aspects of the disclosed concept;

FIG. 16 comprises a flow diagram as configured in accordance with various aspects of the disclosed concept;

FIG. 17 comprises a top plan depiction as configured in accordance with various aspects of the disclosed concept;

FIG. 18 comprises a top plan depiction as configured in accordance with various aspects of the disclosed concept;

FIG. 19-1 and FIG. 19-2 comprise top plan depictions as configured in accordance with various aspects of the disclosed concept;

FIG. 20-1 and FIG. 20-2 comprise top plan depictions as configured in accordance with various aspects of the disclosed concept;

FIG. 21 comprises a top plan depiction as configured in accordance with various aspects of the disclosed concept;

FIG. 22-1, FIG. 22-2, and FIG. 22-3 comprise top plan depictions as configured in accordance with various aspects of the disclosed concept;

FIG. 23 comprises a top plan depiction as configured in accordance with various aspects of the disclosed concept;

FIG. 24 comprises a top plan depiction as configured in accordance with various aspects of the disclosed concept;

FIG. 25 comprises a top plan depiction as configured in accordance with various aspects of the disclosed concept;

FIG. 26 comprises a top plan depiction as configured in accordance with various aspects of the disclosed concept;

FIG. 27 comprises a perspective depiction as configured in accordance with various aspects of the disclosed concept;

FIG. 28 comprises a perspective depiction as configured in accordance with various aspects of the disclosed concept;

FIG. 29 comprises a top plan depiction as configured in accordance with various aspects of the disclosed concept;

FIG. 30 comprises a top plan depiction as configured in accordance with various aspects of the disclosed concept;

FIG. 31 comprises a perspective depiction as configured in accordance with various aspects of the disclosed concept;

FIG. 32 comprises a top plan depiction as configured in accordance with various aspects of the disclosed concept;

FIG. 33 comprises a top plan depiction as configured in accordance with various aspects of the disclosed concept;

FIG. 34 comprises a top plan depiction as configured in accordance with various aspects of the disclosed concept;

FIG. 35 comprises a top plan depiction as configured in accordance with various aspects of the disclosed concept;

FIG. 36 comprises a top plan depiction as configured in accordance with various aspects of the disclosed concept;

FIG. 37 comprises a top plan depiction as configured in accordance with various aspects of the disclosed concept;

FIG. 38 comprises a top plan depiction as configured in accordance with various aspects of the disclosed concept;

FIG. 39 comprises a top plan depiction as configured in accordance with various aspects of the disclosed concept;

FIG. 40 comprises a top plan depiction as configured in accordance with various aspects of the disclosed concept;

FIG. 41 comprises a top plan depiction as configured in accordance with various aspects of the disclosed concept;

FIG. 42 comprises a top plan depiction as configured in accordance with various aspects of the disclosed concept; and

FIG. 43 comprises a top plan depiction as configured in accordance with various aspects of the disclosed concept.

Elements in the figures are illustrated for simplicity and clarity and have not necessarily been drawn to scale. For example, the dimensions, relative positioning, or both of some of the elements in the figures may be exaggerated relative to other elements to help to improve understanding of various embodiments of the present disclosed concept. Also, common but well-understood elements that are useful or necessary in a commercially feasible embodiment are often not depicted in order to facilitate a less obstructed view of these various embodiments of the present disclosed concept. Certain actions or processes may be described or depicted in a particular order of occurrence while those skilled in the art understand that such specificity with respect to sequence is not actually required. The terms and expressions used herein have the ordinary technical meaning as is accorded to such terms and expressions by persons skilled in the technical field as set forth above except where different specific meanings have otherwise been set forth herein.

### Detailed Description

Generally speaking, the disclosure generally relates to an electronic device, which may be a portable electronic device in the examples described herein. Examples of electronic devices include mobile, or handheld, wireless communication devices such as pagers, cellular phones, cellular smart-phones, wireless organizers, personal digital assistants, wirelessly-enabled notebook computers, tablet computers, mobile Internet devices, and so forth. The electronic device may also be a portable electronic device without wireless communication capabilities, such as handheld electronic games, digital photograph albums, digital cameras, media players, e-book readers, and so forth. The foregoing can be further based, at least in part, on a detected orientation of the electronic device.

Pursuant to these various embodiments, a portable electronic device can detect a trigger event and respond by automatically moving a component that comprises a part of the portable electronic device. The trigger event can vary with the application setting. Examples of trigger events include but are not limited to receiving a communication (such as a wireless communication), receiving an input from a user interface, the occurrence of a time-based event, and so forth. The movement can comprise, by one approach, articulation-based movement (including but not limited to pivoting, rotating, sliding, bending, telescoping, elongating, realigning, or separating, to note but a few examples in these regards).

By one approach these teachings will accommodate determining a present suitability of so moving the component, and not moving the component when such movement is not suitable at a time of determining the suitability. Such a determination can precede the movement and/or can occur during the course of the movement as desired.

So configured, one or more components of a portable electronic device can be automatically moved to accommodate, support, or otherwise facilitate matching the form of the portable electronic device to an intended or likely-imminent function. These teachings will also accommodate automatically changing application functionality of the portable communication device as a function of having so moved the component.

These teachings are readily leveraged across a wide variety of existing platforms and methodologies. These teachings are also highly scalable and can work successfully with a wide variety of components and portable electronic devices. So configured, a relatively small device can nevertheless readily support various capabilities by this ability to automatically move one or more components as comprise a part of a given portable electronic device.

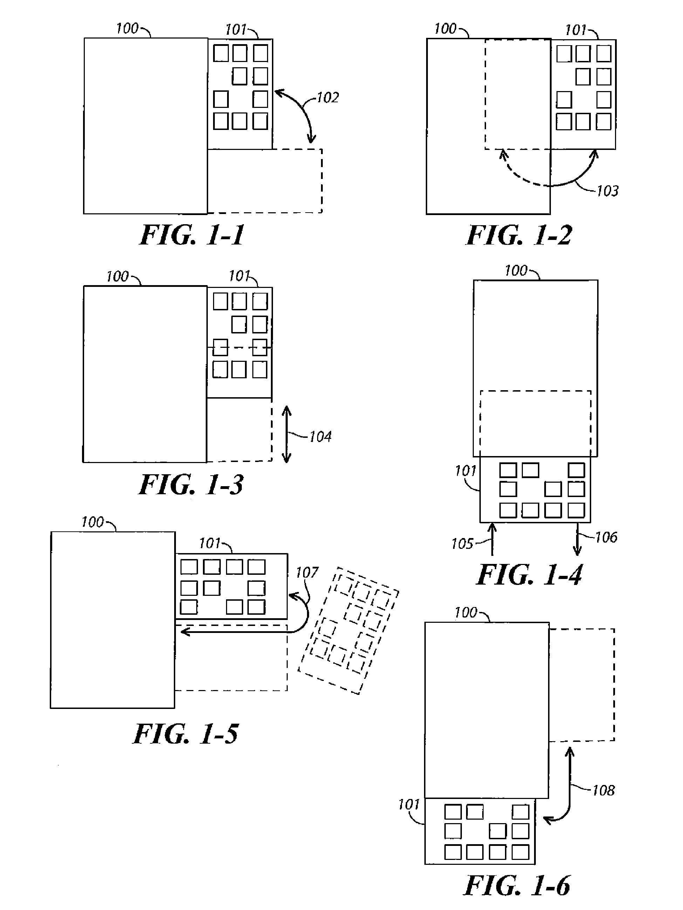

These and other benefits may become clearer upon making a thorough review and study of the following detailed description. Referring to the drawings, and in particular to FIG. 1-1, the processes described herein are typically employed in conjunction with an electronic device 100 that, in turn, works in conjunction with at least one component 101.

By one approach, this component 101 comprises a discrete component that is physically distinct onto itself (although, in at least some application settings and at least some of the time this discrete component 101 may be physically coupled to the electronic device 100). In some situations, the electronic device 100 and the component 101 may be similar. For example, both the electronic device 100 and the component 101 may be peer devices, such as cellular smart-phones. In another approach, this component 101 comprises a native component of the electronic device 100 and is considered an original and integral part of that electronic device 100.

For the sake of illustration, FIG. 1-1 presents this component 101 as being smaller than the electronic device 100. These teachings readily accommodate other approaches, however. For example, the component 101 can be the same size as the electronic device 100. As another example, the component 101 can be larger than the electronic device 100. To the extent that there may be more than one such component 101, these various components can similarly share a same size or can vary in size.

In any event, this component 101 can physically move relative to the electronic device 100. Reference to movement refers to movement that is accommodated as an ordinary capability per the design of these elements. Accordingly, movement that can only be achieved by, for example, damaging or breaking one or both of these elements is not included within the motion contemplated herein.

These teachings nevertheless accommodate a great variety of types of movement. These movement types can include, for example, various modes of articulation including, but not limited to, pivoting, rotating, folding/unfolding/bending (as generally represented by the arrows denoted by reference numerals 102 in FIG. 1-1 and 103 in FIG. 1-2), sliding (as generally represented by the arrows denoted by reference numerals 104 in FIG. 1-3, 105 and 106 in FIG. 1-4), telescoping/elongating, realigning (as generally represented by any of the foregoing arrows as well as the arrow denoted by reference numeral 108 in FIG. 1-6 which illustrates that the component 101 can be moved along any of two or more sides of the electronic device 100), and even separation (or combination) of these two elements as generally represented by the arrow denoted by reference numeral 107 in FIG. 1-5, which illustrates that the component 101 can be physically separated, re-oriented/realigned, and combined with the electronic device 100.

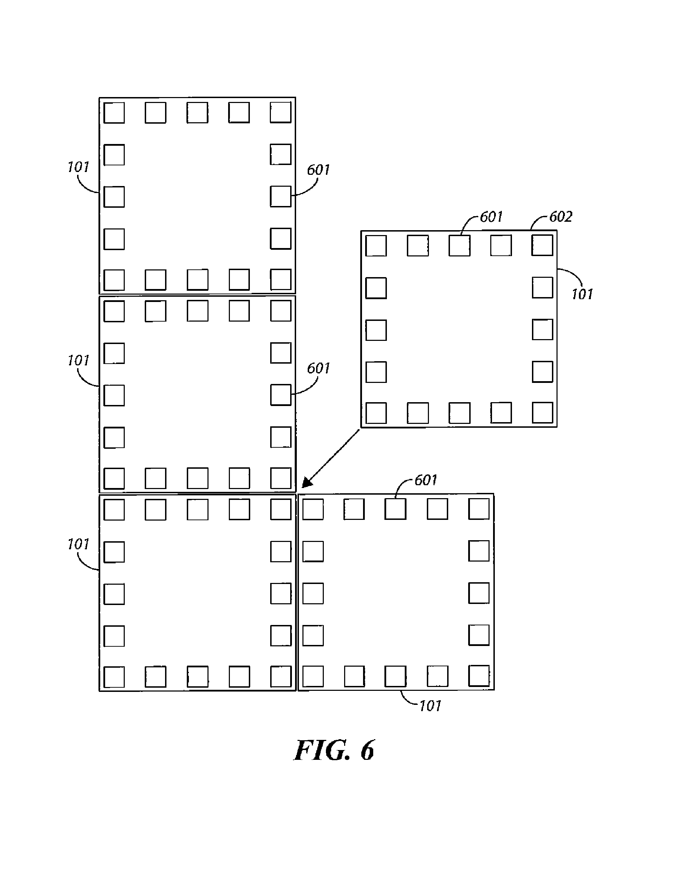

For the sake of simplicity only a single electronic device 100 and a single component 101 are shown in FIGS. 1-1 through 1-6. These teachings, however, support essentially any number of components 101. In such a case the various components 101 may all couple (physically and/or logically) to the electronic device 100. Alternatively, some of the components 101 can couple to other of the components (as illustrated, for example, in FIG. 6). More than one electronic device 100 may couple to a given assortment of components 101.

These teachings support a wide variety of differing topologies (or landscapes) resulting from different arrangements of these components 101 and devices 100. The variety of arrangements can better accommodate a user's or application's needs, adapt to the context and surroundings, and/or facilitate leading or influencing the behavior of the user in a corresponding way. In a very real way, function of one or more of the electronic devices 100 and/or one or more of the components 101 can follow the form of a given topology.

In some of these cases the component 101 (or at least a user interface as comprises a part of the component 101) may be fully (or at least largely) hidden from view (of an ordinary person who is interacting with the electronic device in an ordinary and planned manner) when in a non-deployed position For example, one can nest or otherwise contain the component 101 in whole or in part within the electronic device 100. Conversely such a component 101 (or at least the aforementioned user interface) can be largely or fully in view of the ordinary user when the component 101 assumes a fully-deployed position.

A number of examples will be provided. These examples are not intended to represent a limited or exhaustive set of examples, either by their number or by their points of specificity. Instead, these teachings accommodate a virtually unending number of possibilities.

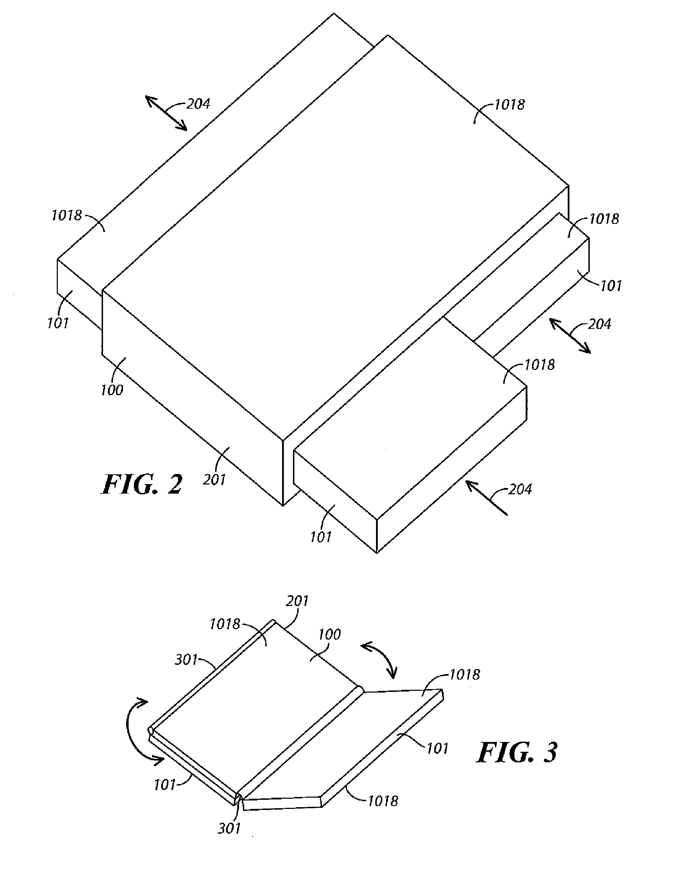

Referring to FIG. 2, a given electronic device 100 can comprise a housing 201 having a suitable form and size to readily permit the electronic device 100 to be held and operably manipulated by a person. In this example the electronic device 100 further includes a touch-sensitive display 1018 that essentially comprises one side of the electronic device 100.

In this example the electronic device 100 has three native components 101 that each also comprises at least a touch-sensitive display 1018. Each of these components 101 is able to be moved in and out of the housing 201 (as generally represented by the arrows denoted by reference numeral 204). More particularly, such a configuration permits the components 101 to be contained within the housing 201 in a non-deployed state. This configuration, in turn, greatly reduces the overall size and periphery of the overall platform and makes it easier for the user to, for example, carry or store the platform. This configuration also permits, however, the overall available display area to be considerably increased by moving the components 101 to a fully-deployed state.

FIG. 3 illustrates an example where two components 101 are each physically connected to the electronic device 100 by a respective hinge 301 disposed along opposing edges of the electronic device's housing 201. One or both primary sides of any of these respective elements can include a touch-sensitive display 1018. So configured the overall platform can again achieve a concise, easily-carried, and easily-stored form factor while also supporting the capability to offer a variety of user interface options including options that make use of an increased display area that can be achieved by unfolding the components 101 away from the electronic device 100.

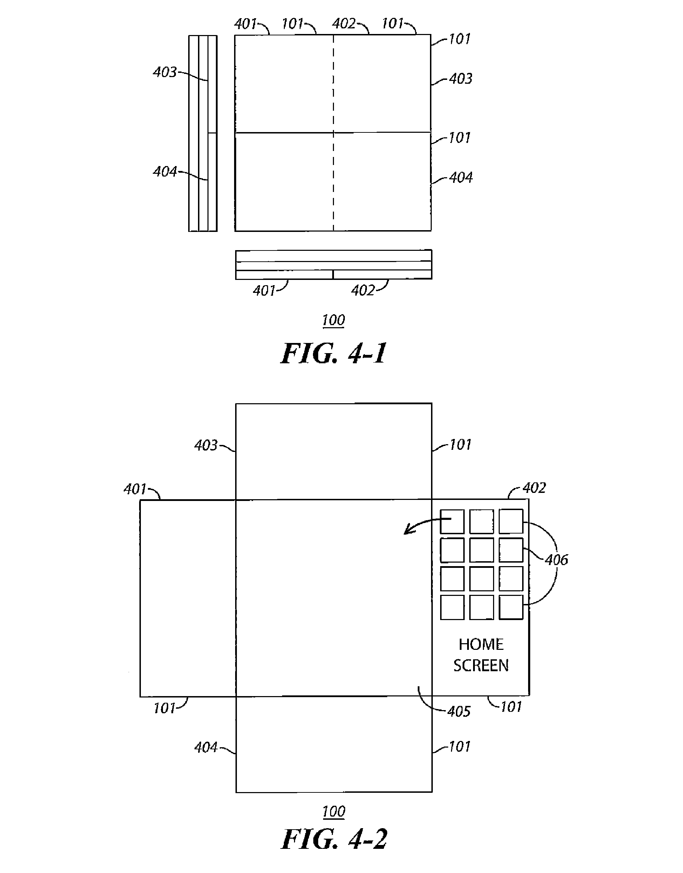

FIG. 4-1 and FIG. 4-2 illustrate an example of a portable electronic device 100 having four moveable components 101 which include sliding components 401 and 402, also known as sliders, and rotating or pivoting components 403 and 404, also known as flips. The moveable components 101 are shown in non-deployed positions in FIG. 4-1 and in deployed positions in FIG. 4-2. Any one or more of the moveable components 101 may be deployed at a given time.

Different user interfaces may be incorporated into the moveable components 101, including physical interfaces such as keyboards, microphones, and speakers, and virtual interfaces, such as touch-sensitive displays. For example, a touch-sensitive display may be part of each of the sliders 401 and 402, a speaker and optional display may be part of one flip 403, and a microphone and a keyboard, either physical or virtual, may be integrated into the other flip 404. A touch-sensitive display can be provided on a main segment 405 of the electronic device 100.

Depending on the needed or desired functionality, one or more of the moveable components 101 may be opened or deployed. In an example where all four components 401, 402, 403, and 404 are fully deployed (as illustrated in FIG. 4-2), a number of application icons 406 are displayed on one slider 402, and information related to an application is displayed on one of the components 101 or the main segment 405 when the icon for the application is invoked by dragging onto the component 101 or main segment or when another method of launching is applied. For example, a calendar application may be displayed on one slider 401, a music player may be displayed on the upper flip 403, and an email interface may be displayed on the main segment 405. Each of the displayed applications may be executed concurrently or only a selected application or applications may be running at any given time.

Flexible ribbon cable, fiber optics, customized hinges, and so forth facilitate movement while maintaining an ability to provide power and exchange data between the components 101 and the main segment 405.

The form factor of the combined electronic device 100 and these components 101 can be varied in numerous ways to accommodate a wide variety of user preferences or requirements. In addition, and as disclosed below in detail, functionality of such a platform can be based or driven, at least in part, in dependency upon a particular current form factor or relative motion of these respective elements.

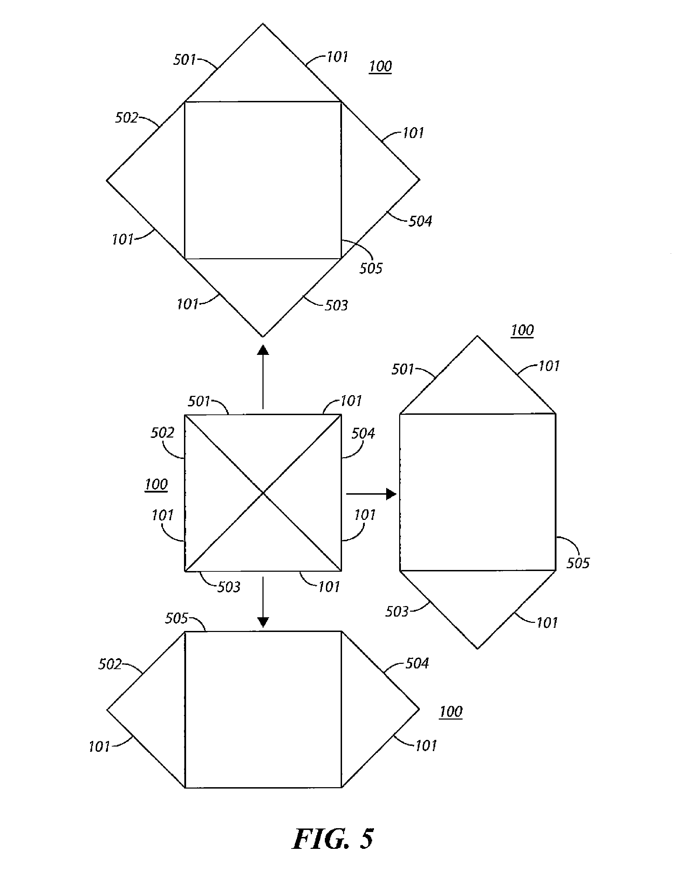

An alternative form factor for a portable electronic device 100 is shown in FIG. 5. This form factor includes a plurality of moveable components 101 in the shape of triangles that rotate or pivot into a deployed position either from the front or back of a main segment 505 of the portable electronic device 100. When all of the moveable components are fully open or deployed as shown at the top of the drawing, a larger square results, which may be utilized in the diamond orientation shown or rotated 45 degrees such that the presentation of the device is square to a user.

Any one or more of the moveable components 101 may be deployed at a given time. Different user interfaces may be incorporated into the moveable components 101, including physical interfaces such as keyboards, microphones, and speakers, and well as virtual interfaces such as touch-sensitive displays. For example, a touch-sensitive display may be part of each of the side flips 502 and 504 and the main segment 505, a speaker and optional display may be part of an upper flip 501, and a microphone and an optional display may be integrated into a lower flip 503.

Depending on the needed or desired functionality, one or more of the moveable components 101 may be opened or deployed. For example, when the "vertical" flips 501 and 503 are opened or deployed, a phone application or music player may be automatically and responsively launched. As a further example, when the "horizontal" flips 502 and 504 are opened or deployed, an email application or game may be automatically and responsively launched such that a keyboard or game controls are displayed, respectively.

In an example where all four components 501, 502, 503, and 504 are fully deployed, a number of application icons can be automatically displayed on one flip 502, for example. Information related to an application is displayed on another of the components 101 or the main segment 505 when the icon for the application is dragged onto the component 101 or main segment or another method of launching is applied. For example, a calendar application may be displayed on one slider 504, a music player may be displayed on the upper flip 501, and an email interface may be displayed on the main segment 505.

Flexible ribbon cable, fiber optics, customized hinges, and so forth can again facilitate movement while maintaining an ability to provide power and exchange data between the components 101 and the main segment 505. To facilitate maximization of space, the displays may be foldable displays, such that a permanent or relatively permanent fold in the display, such as an organic light-emitting diode (OLED)-based display, facilitates displaying information up to the edge of the housing of the movable components and the main segment, thus minimizing the effect of the housing and increasing available display area by eliminating visible non-display areas.

Although triangles and rectangles are shown in the examples of FIG. 5, any other shape may be successfully utilized as desired. These teachings will also readily accommodate mixing a variety of shapes in a single application setting such that a single electronic device 100 includes a variety of differently-shaped components.

A plurality of components 101 are shown in a cooperative configuration in FIG. 6. In a cooperative configuration, for example, information may be displayed across one or more displays as corresponds to these components 101 (where the display of a single document or image is coordinated among the processors of these devices) or an application such as a game can be controlled across all the coordinated devices, and so forth. For example, the larger overall display area achieved by combining a plurality of such components may be utilized to display more aspects of a game, e.g., a larger geographic area for a war game. As another example, larger objects may be displayed across multiple devices.

Multiple control points may be provided by established communication and cooperation among the processors of the devices. One or more sensors 601 may be distributed along the outer perimeter of each of the components 101 to assess the alignment of these devices with respect to one another to facilitate coordination of the display of information and control of information and input to the devices. The sensors 601 may detect, for example, relative position and configuration of the devices with respect to one another, movement of the devices with respect to one another in any dimension, and proximity of a device, such as a separate device 602 that is entering the range of the group of devices.

Examples of sensors 601 include accelerometers, optical sensors (optionally paired with optical emitters), magnetic sensors such as Hall effect sensors, light sensors, proximity sensors, pressure sensors, near-field communication devices, and so forth. In one example, a plurality of optical emitters, such as light emitting diodes, may each emit a different color, for example by emission color or color filter, or a pattern of light, such as a coded sequence of blinking light, in a known distribution to facilitate detection of the relative orientation of devices.

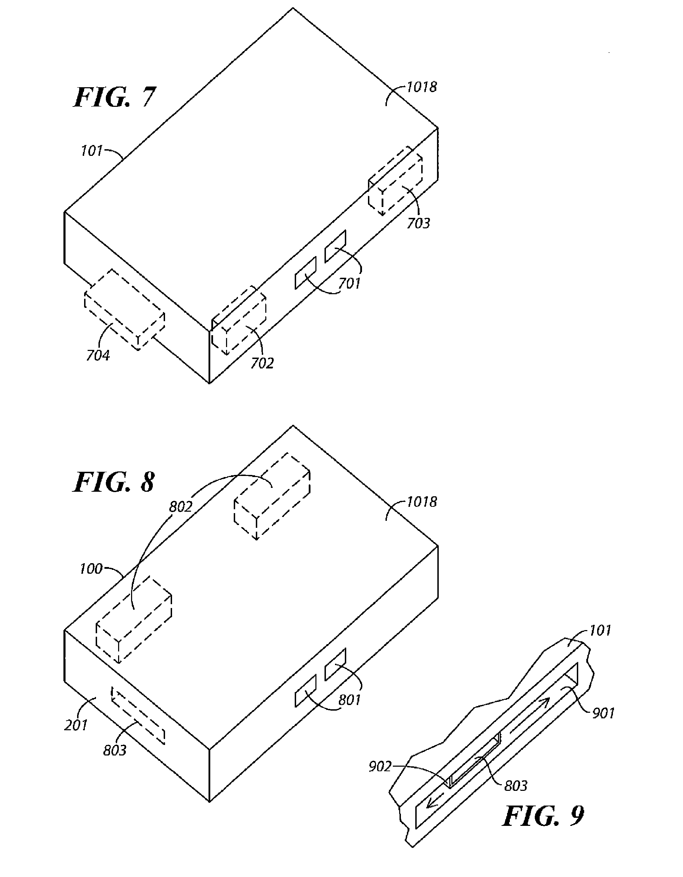

FIG. 7 depicts a component 101 having several examples of contact or coupling interfaces. These examples can be used to couple the component 101 with one or more electronic devices 100 and/or one or more other components 101. For example, as illustrated one or more exposed electrical contacts 701 can be disposed along one or more outer surfaces of the component 101 that are configured to make an appropriate electrical contact when placed alongside a corresponding electronic device 100. These electrical contacts 701 can electrically couple to the component's internal circuitry to permit the provision or receipt of electrical signals or power.

As another example, the component 101 may have one or more magnetic elements 702 and 703 that are disposed on an exterior surface of the component 101 or that are disposed within the component 101. These magnetic elements 702 and 703 can comprise standard magnets or can comprise, for example, electromagnets that can be selectively switched on and off (or otherwise modulated) by the component 101.

As another optional approach, such a component 101 can have a plug-like member 704 that includes electrical conductors to facilitate electrically coupling the component 101 to a corresponding electronic device 100. When using a plug-like approach, the coupling between the component 101 and the electronic device 100 may be physical as well as logical.

FIG. 8 depicts an electronic device 100 having a housing 201 that includes one or more communicative interfaces to interact with such components 101. This communicative interface can include, for example, one or more exposed electrical contacts 801 that are sized, configured, and located to interact appropriately with one or more corresponding components 101.

As noted above, the temporary coupling between the component 101 and the electronic device 100 can comprise a magnetically-based coupling. In the example given above, the component 101 can have one or more magnetic elements 702 and 703. To permit the electronic device 100 to sense and even to communicate with such a component 101, the electronic device 100 can include one or more magnetically-responsive sensors 802 that are configured to respond to the magnetic energy of the component's magnetic elements.

These magnetically-responsive sensors 802 can permit the electronic device 100 to detect whether a component 101 is disposed proximal to the electronic device 100. These magnetically-responsive sensors 802 can also permit the electronic device 100 to determine a particular positioning of the component 101 with respect to the electronic device 100. This proximity/position information can serve to trigger a logical coupling between the electronic device 100 and the component 101 using, for example, a short-range radio frequency-based wireless communication approach. This configuration will also accommodate communicating information via modulation of the magnetic elements and detecting that modulation via the magnetically-responsive sensors 802.

The electronic device 100 can also optionally include one or more slots 803 formed therein to receive the aforementioned optional plug-like members 704. These elements can be configured to provide, for example, a friction fit that tends to hold the component 101 in place with respect to the electronic device 100. This slot 803 can further include other retaining mechanisms or even locking mechanisms. Such a slot can also include electrical-magnetic (or optical) interfaces to facilitate logically coupling active elements of the component 101 to counterpart elements of the electronic device 100.

When the housing 201 of the electronic device 100 has a plurality of these optional slots 803, one or more of these additional slots 803 can be located on other edges of the housing 201. Such slots 803 can serve to receive additional components 101 or can serve to provide the user with a variety of possibilities as to where the user attaches a given component 101 to the electronic device 100. When providing a plurality of slots 803, the slots may all be essentially identically configured or may differ in order to accommodate differently-sized or configured plug-like members.

The aforementioned optional slot 803 may itself be selectively movable as shown in FIG. 9. For example, a movable component 902 that includes the slot 803 may slide along the length of a corresponding recess 901 in a side edge of the housing 201.

These teachings describe a variety of ways by which a particular state of configuration of these elements, or various ways by which these elements are moved with respect to one another, can serve to automatically vary the operability of one or both of these elements and the application functions performed.

The electronic device 100 can comprise any of a wide variety of devices including both programmable, multi-purpose devices as well as fixed-purpose devices. The electronic device 100 may comprise, at least in part, a portable communication device.

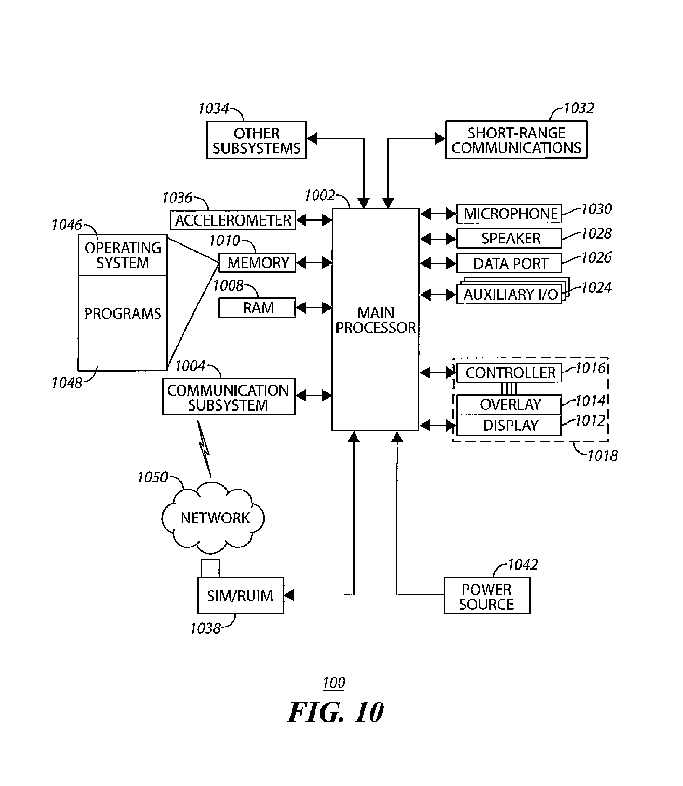

A block diagram of an example of an electronic device such as the portable electronic device 100 is shown in FIG. 10. (A component 101 as referred to herein may be an electronic device with all or part of the same functionality of the portable electronic device 100; accordingly, this description of the portable electronic device 100 will also be understood to apply as well to the component 101.)

The portable electronic device 100 includes a processor 1002 that controls the overall operation of the portable electronic device 100. Communication functions, including data and voice communications, are performed through a communication subsystem 1004. The communication subsystem receives messages from and sends messages to a wireless network 1050. The wireless network 1050 may be any type of wireless network, including, but not limited to, data wireless networks, voice wireless networks, and networks that support both voice and data communications. A power source 1042, such as one or more rechargeable batteries or a port to an external power supply, powers the electronic device 100.

The processor 1002 interacts with other elements, such as Random Access Memory (RAM) 1008, memory 1010, a display 1012 with a touch-sensitive overlay 1014 operably coupled to an electronic controller 1016 that together comprise an optional touch-sensitive display 1018, one or more actuators 1020, one or more force sensors 1022, an auxiliary input/output (I/O) subsystem 1024, a data port 1026, a speaker 1028, a microphone 1030, short-range communication subsystem 1032, and other device subsystems 1034.

One or more user interfaces are provided. Input via a graphical user interface is provided via the touch-sensitive overlay 1014. The processor 1002 interacts with the touch-sensitive overlay 1014 via the electronic controller 1016. Information, such as text, characters, symbols, images, icons, and other items that may be displayed or rendered on a portable electronic device, is displayed on the touch-sensitive display 1018 via the processor 1002. The processor 1002 may interact with an accelerometer 1036 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 1038 for communication with a network, such as the wireless network 1050. Alternatively, user identification information may be programmed into memory 1010.

The portable electronic device 100 includes an operating system 1046 and software programs, applications, or components 1048 that are executed by the processor 1002 and are typically stored in a persistent, updatable store such as the memory 1010. Additional applications or programs may be loaded onto the portable electronic device 100 through the wireless network 1050, the auxiliary I/O subsystem 1024, the data port 1026, the short-range communications subsystem 1032, or any other suitable subsystem 1034. Memory 1010 may comprise a non-transitory storage media that stores executable code, when executed, causes one or more of functions or actions as described herein.

A received signal such as a text message, an e-mail message, or web page download is processed by the communication subsystem and input to the processor 1002. The processor 1002 processes the received signal for output to the display 1012 and/or to the auxiliary I/O subsystem 1024. A subscriber may generate data items, for example e-mail messages, which may be transmitted over the wireless network 1050 through the communication subsystem. For voice communications, the overall operation of the portable electronic device 100 is similar. The speaker 1028 outputs audible information converted from electrical signals, and the microphone 1030 converts audible information into electrical signals for processing.

The touch-sensitive display 1018 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 1014. The overlay 1014 may be an assembly of multiple layers in a stack including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

One or more touches, also known as touch contacts or touch events, may be detected by the touch-sensitive display 1018. The processor 1002 may determine attributes of the touch, including a location of a touch. Touch location data may include data for an area of contact or data for a single point of contact, such as a point at or near a center of the area of contact.

The location of a detected touch may include x and y components, e.g., horizontal and vertical components, respectively, with respect to one's view of the touch-sensitive display 1018. For example, the x location component may be determined by a signal generated from one touch sensor, and the y location component may be determined by a signal generated from another touch sensor. A signal is provided to the controller 1016 in response to detection of a touch. A touch may be detected from any suitable input member, such as a finger, thumb, appendage, or other objects, for example, a stylus, pen, or other pointer, depending on the nature of the touch-sensitive display 1018. Multiple simultaneous touches may be detected.

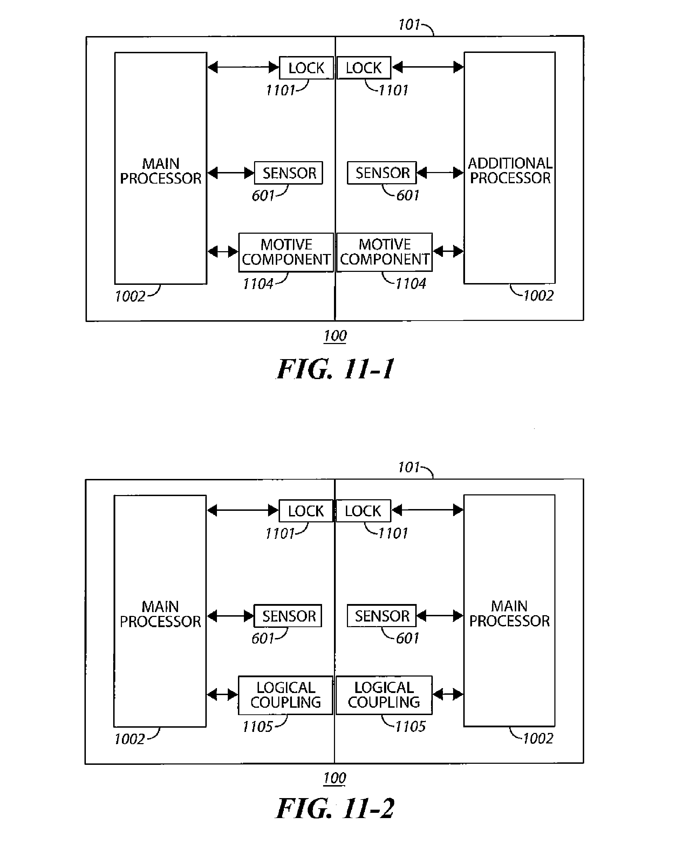

A block diagram of a portable electronic device 100 with a movable component 101 is shown in FIG. 11-1. In this example, the electronic device 100 includes within its housing a controller that is part of the processor 1002 as shown in FIG. 11-1. This controller can alternatively comprise, for example, a discrete controller such as a circuit or other electronic element. Such a controller can comprise a fixed-purpose hardwired platform or can comprise a partially or wholly programmable platform.

Optionally, preferences information may be stored in memory in the electronic device or alternatively in optional memory in the component 101. This preferences information can, for example, comprise information that maps particular application functions to corresponding physical configurations of the electronic device in combination with the component 101.

The user interface(s), when present, can include essentially any input or output mechanism. Options include touch-sensitive and non-touch-sensitive displays of any kind, alphanumeric-entry mechanisms (such as keyboards, keypads, and the like), cursor-control mechanisms (such as a mouse, joystick, trackball, touchpad, or the like), voice recognition modules, and so forth. In addition to supporting a wide variety of capabilities, the user interface can also facilitate input entry from a user to enter, for example, information that maps particular application functions to corresponding physical configurations of the electronic device 100 and component(s) 101, which information, when entered, can be stored in memory.

A controller may be configured to detect and, as appropriate, respond to one or more trigger events. For example, a trigger event can comprise a received communication such as, but not limited to, a received wireless voice or data communication. As another example, a trigger can comprise an input from the user interface, such as selection of an icon that results in opening an application, such as a media player, or a file for an application, such as a music or video file. In yet another example, a trigger in a given application can comprise a time-based event, such as a calendar event, a duration of time expiring, a time of day, a day of the month arriving, and so forth. As a specific example, when a calendar event includes a teleconference, the electronic device 100 may open one or more components 101 to render usable a speaker and microphone, and the phone application may optionally be displayed on the display.

The electronic device 100 can comprise one or more transceivers that are part of the aforementioned communication subsystem 1004. This transceiver can include both short-range transceivers (such as, but not limited to, Bluetooth-compatible transceivers, so-called Wi-Fi-compatible transceivers, light-based transceivers, and so forth) and long-range transceivers (including, but not limited to, cellular telephony devices). Instead of a transceiver or in addition thereto, the electronic device 100 can further comprise a receive-only wireless receiver and/or a transmit-only wireless transmitter.

The electronic device 100 can be configured to take a responsive action upon detecting that one or more movable components 101 have moved or are moving relative to another part of the electronic device 100. To facilitate such a capability, the electronic device 100 can further optionally include one or more sensors 601 that operably couple to the controller to provide, for example, data regarding a sensed configuration or state. Such a sensor can, at least in part, detect, for example, that a movable component 101 is moving or has moved to a new position relative to another part of the electronic device 100.

Examples of sensors 601 include accelerometers, optical sensors, magnetic sensors such as Hall effect sensors, light sensors, proximity sensors, pressure sensors, near field communication devices, and so forth. One or more sensors 601 can be configured to sense a present physical configuration of a plurality of elements, such as one part of the electronic device 100 and one or more movable components 101 that are part of the electronic device 100. The relevant part of the electronic device 100 may be, for example, an edge, perimeter, or other part of the housing that has different orientations with respect to the component 101 depending on the position and movement of the component 101. The movement includes, for example, various modes of articulation including, but not limited to, pivoting, rotating, folding/unfolding/bending, sliding, telescoping/elongating, realigning, separation, or combination thereof. Sensors 601 may be disposed in the component 101, the electronic device 100, or both.

One or more sensors 601 can be configured to sense one or more kinds of physical interaction between the electronic device 100 and one or more movable components 101. This sensing capability can comprise, for example, sensing one or more characteristics of movement to thereby detect such physical interaction. A non-limiting list of illustrative examples of such characteristics of movement include a direction of movement of, for example, a movable component 101 with respect to another part of the electronic device 100, orientation of one element with respect to another element such as the orientation of the electronic device 100 with respect to a given movable component 101, an identification of which element moved from amongst a plurality of monitored elements, a type of motion, and so forth.

Such characteristics can serve, in turn, to identify the particular kind of physical interaction. Non-limiting examples might include a physical reorientation of, for example, the movable component 101 with respect to the electronic device 100, a pivoting movement between the movable component 101 and the electronic device 100, a sliding movement between the movable component 101 and the electronic device 100, a momentary change in physical proximity of the movable component 101 with respect to the electronic device 100, and so forth.

These teachings also accommodate the use of sensors that serve to detect a particular physical state. Examples include, but are certainly not limited to, detecting that a given movable component is presently not deployed, detecting that a given movable component is presently fully deployed, detecting that a given movable component is presently partially (but not fully) deployed, detecting which area or areas of the electronic device 100 presently interact with the movable component 101, and so forth.

Depending upon the particular physical interaction/characteristic that one wishes to detect in a given application setting, the sensor(s) 601 employed can vary. Depending upon circumstances, magnetic field-based sensors, light-based sensors, color-based sensors, acceleration-based sensors, power/radiation-level-based sensors, location-based sensors, optical sensors, pressure sensors, and so forth, or any combination thereof, may be utilized.

The electronic device 100 can further optionally comprise one or more locks 1101. In one case this lock(s) 1101 is controlled by the controller and serves to lock one or more movable components 101 in place with respect to the electronic device 100. These teachings also accommodate, however, permitting a user to manipulate the lock 1101 using a hand or a tool in order to effect the locking and unlocking of the element. Various locking mechanisms are known in the art and require no further description here. The sensor 601 can serve to sense a particular locked/unlocked state of such a lock 1101.

As noted above, these teachings are well designed to employ in conjunction with a component 101 that can move with respect to an electronic device 100. In some cases, that movement may be initiated by the physical manipulations of an end user or by some other external source. The present teachings also accommodate the electronic device 100 causing such movement. For example, the electronic device 100 can optionally include one or more motive components 1104 that are positioned and configured to cause movement of the electronic device 100 and the component 101 with respect to one another.

The motive component 1104 can interface with and make use of gears, cams, pistons, and so forth to effect the appropriate motion. Alternatively, the motive component can employ elements such as motors, actuators, solenoids, electromagnets, piezoelectric devices, relays, voice coils, hydraulic actuators, electroactive polymers, and so forth. These and other approaches can all be employed as appropriate in a given application setting to effect, for example, the appropriate articulation or reverse articulation of one or more movable components 101.

This movable component 101 typically (though not necessarily always) comprises at least one user interface. This user interface(s) can receive input from the user, provide output to the user, or both. Examples of user interfaces include displays, touch-sensitive displays, touchpads, optical joysticks, trackballs, physical keys or buttons, and so forth.

The user interface of the component 101 may logically couple (using logical coupler 1105, for example) to the electronic device's controller or may logically couple to a controller that comprises a part of the movable component 101, such as an additional processor 1102, a discrete controller, or other control device. When present, the controller of the moveable component 101 can be configured to carry out one or more of the movable component actions or functions as are described herein. The controller of the moveable component 101 may carry out one or more of the movable-component actions or functions as are described herein or may operate in conjunction with control associated with the electronic device controller.

The movable component 101 can include other hardware and/or software to support a given application. For example, the movable component 101 can optionally include memory that can store information that can be selectively provided to the electronic device 100. Such information can comprise, for example, one or more identification (ID) codes that can be a unique identification code that correlates to the movable component 101 to differentiate a particular movable component from other movable components. The memory can also store other information such as profile or preferences information associated with the movable component 101. The profile may include, but not be limited to, information such as one or more usage contexts for the discrete component 101, identification of an end user, local resources that are accessible via the component 101, and so forth.

The profile may optionally include a mapping that includes one or more application functions that are performed when a component is placed in a particular position with respect to a portable electronic device and/or another component, and one or more components and component positions that are engaged when an application function is performed. For example, when one or more components that are deployed include a speaker and microphone, the phone application may be opened by the device 100. In another example, when a media file such as a song is selected, a component including a speaker is deployed. Components including a keyboard and display are deployed when an email is received in another example.

As another example, the movable component can include one or more wireless transceivers, receivers, or transmitters that are part of the aforementioned communication subsystem 1004. This transceiver can include essentially any short-range or long-range transceiver technology. Such a transceiver can, for example, wirelessly communicate with a corresponding element of the electronic device 100, with a counterpart element of another movable component 101 as may be presently (or imminently) logically coupled to the electronic device 100, or with a remote access point (such as a Wi-Fi hotspot located in the general area), a resource (such as an information or service server that is accessible via a network such as the Internet), and so forth.

The various elements (and others as appropriate) of the movable component 101 can be operably coupled amongst themselves or can be individually operably coupled to, for example, the electronic device's controller. In an application context, at least one of the elements of the component 101 logically couples to the electronic device's controller via a corresponding logical coupling 1105. A logical connection or logical coupling 1105 includes at least one communication path shared by two or more devices to convey data. Examples of data include, but are not limited to, instructions, status signals, state-based messages, informational content such as images for display, and so forth. The logical connection or logical coupling 1105 may utilize a communication protocol that supports, for example, handshaking, authentication, error detection or correction, or the like. This logical connection/coupling 1105 may comprise a part of, or be distinct from, any physical coupling between the component 101 and the electronic device 100. For example, the logical connection/coupling 1105 may comprise a wired connection, a wireless connection, or any combination thereof.

Accordingly, the movable components 101 offer any of a variety of enhanced, supplemented, or expanded user-interface opportunities. These opportunities can include both fixed-purpose user interfaces, for example, audio-signal drivers and transducers, physical buttons, switches, or keys, displays, image-capture devices, and so forth, as well as flexible or programmable user interfaces such as touch-sensitive displays.

As noted above, these teachings facilitate such an electronic device 100 to respond in a variety of ways to presence/movement/orientation of one or more such movable components 101. These examples are intended to serve an illustrative purpose and are not to be taken as representing any limitations by their specificity nor are these examples to be considered an exhaustive listing of all relevant possibilities as to the scope and application of these teachings.

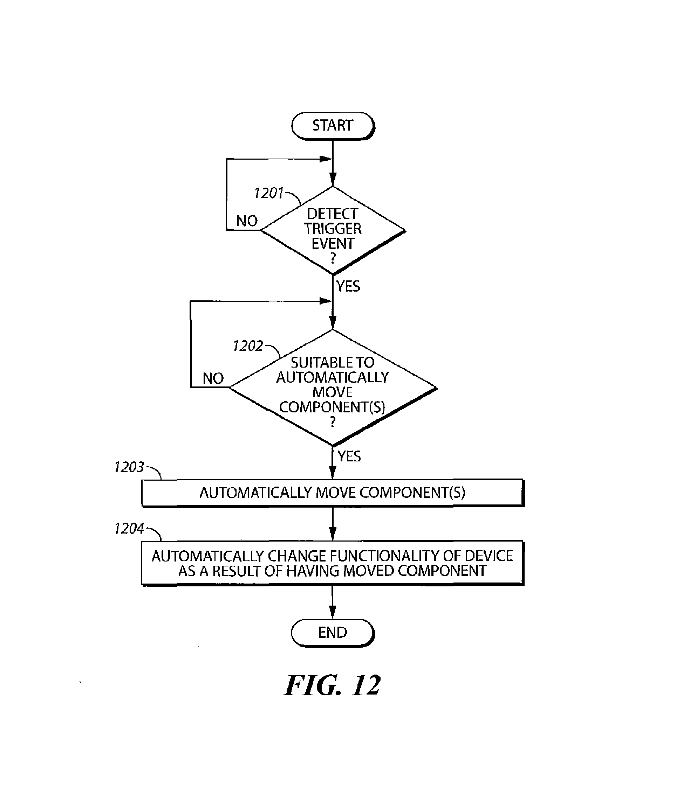

A flowchart illustrating a method of moving a movable component is shown in FIG. 12. The method is performed by the electronic device 100 that is a portable electronic device in this example. The method may be carried out at least in part by software executed, for example, by the processor 1002. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium. The portable electronic device detects 1201 a trigger event. As noted earlier, this trigger event can comprise any of a variety of trigger events including asynchronous events such as a received wireless communication or received user input as well as synchronous events such as any of a variety of time-based events. This detection process 1201 optionally comprises monitoring for any of a plurality of different trigger events.

In the absence of detecting a trigger event this process can accommodate any of a variety of responses. Examples of responses can include temporal multitasking (pursuant to which the portable electronic device conducts other tasks before returning to again monitor for a trigger event) as well as continually looping back to essentially continuously monitor for the trigger event(s). These teachings also accommodate supporting this detection activity via a real-time interrupt capability.

Detection of the trigger event can facilitate automatic movement of a movable component 101. Optionally, a present suitability of automatically moving such a component 101 may be determined 1202. This determination can be based, for example, upon use of one or more sensors 601 that detect one or more relevant circumstances or states. Examples include a light sensor that detects, for example, when the electronic device 100 is disposed within or under a purse, pocket, or backpack, a force or proximity sensor to detect, for example, when movement of the given movable component 101 is likely to, or is, encountering an obstacle, and so forth.

Upon determining a present unsuitability of beginning to move or continuing to move the movable component 101, movement of the component 101 is inhibited, e.g., the component 101 is not moved or movement of the component 101 is stopped or discontinued, either partially or completely. This suitability determination can occur prior to automatically moving the component 101, while automatically moving the component 101, or both. When unsuitability is determined at 1202, the process of determining suitability may be repeated until suitability is confirmed. Optionally, a timeout or prompt may return the process to 1201.

In response to detection 1201 of the trigger event, the electronic device 100 automatically moves 1203 at least one component 101. For example, this movement can comprise automatically moving a component 101 that comprises a part of or is otherwise native to the portable electronic device 100. As another example, this movement can comprise automatically moving multiple components 101, either both at about the same time or one component at a time. In such a case the component 101 might comprise, for example, a housing, a battery cover, or a memory card cover.

This automatic movement can vary based on a given application setting or preference. For example, this automatic movement can comprise moving the component via articulation, such as via pivoting, rotating, sliding, bending, telescoping, elongating, realigning, separating, and so forth. The movement can serve, for example, to move the component from a non-deployed state, where, for example, the component is partially or fully contained within the portable electronic device, to a partially or wholly-deployed state, or vice versa, where, for example, the component is automatically moved back to a previous position.

For example, this automatic movement of the component 101 with respect to the remainder of the portable electronic device 100 can be a complete response. In other cases, further responsive actions may be performed. For example, the portable electronic device can additionally optionally automatically 1204 change application functionality of the portable communication device based on or in response to having moved the component 101. For example, when the movable component comprises an alphanumeric keypad, automatic deployment of the component to fully reveal the alphanumeric keypad can also lead to automatically initiating a particular application or application functionality that is specifically correlated to the present availability of such an alphanumeric keypad.

For example, when the portable electronic device receives a phone call when in a completely closed state, the appropriate components of the portable electronic device are automatically moved or opened to facilitate use of the speaker 1028 and microphone 1030. As another example, when the user selects the media player, appropriate components of the portable electronic device are automatically moved or opened to facilitate use of the speaker 1028, display of information regarding the available or selected music, and media player controls (for example, a touch-sensitive display 1018 showing options for media player controls).

The component 101 need not comprise a native component of the electronic device 100, such as shown in FIG. 11-2. In many such cases (though certainly not all), the component 101 may be physically as well as logically coupled to the electronic device 100, for example, to accommodate an end user's present needs.

In the example shown at FIG. 11-2, a first portable electronic device 100 is coupled to a peer portable electronic device 100 that also comprises, for the purposes of this example, a discrete component 101 with respect to the first portable electronic device 100. (For this illustrative example it is presumed that both of these portable electronic devices 100 are configured as shown in FIG. 10.)

In such a case, profile information may be stored in memory 1010 of either device. This profile information can correlate to unique identification codes that correspond to various components 101, for example, when such components 101 are non-native to the electronic device 100. In such a case, the profiles can provide any of a variety of information, including, but not limited to, a class of user interface that characterizes the component 101, a particular discrete component instance, a particular display edge (when, for example, the component 101 includes a display such as a touch-sensitive display 1018 or other display), a resource that is accessible via the component 101 (including both resources that are local to the component 101 such as particular programs, data stores, user interface forms, and so forth as well as resources that are remote to the component 101 and that may be accessed via a communication capability of the component 101), a usage context for the discrete device, identification of a particular end user, identification of a group of users, and so forth.

Sensors 601 may be disposed along an outer perimeter of each device 100 to facilitate detection of the relation of other electronic devices, for example, to coordinate a display of information on multiple displays. One or more sensors may optionally be disposed on each side of the device 100, e.g., along each of the four sides of a generally rectangular-shaped device 100.

Identification information that correlates to specific interfaces, surfaces, or attachment edges of the component 101 may be stored, for example, in memory 1010. When, for example, the component 101 has a first electronic device-connection interface along a first edge and a second electronic device-connection interface along a second edge, each connection interface can be provided with a different connection identifier. The electronic device 100 can use such connection identifiers to identify a particular attachment configuration. Identification of the attachment configuration can permit the electronic device 100 to adjust its use of the component 101 accordingly.

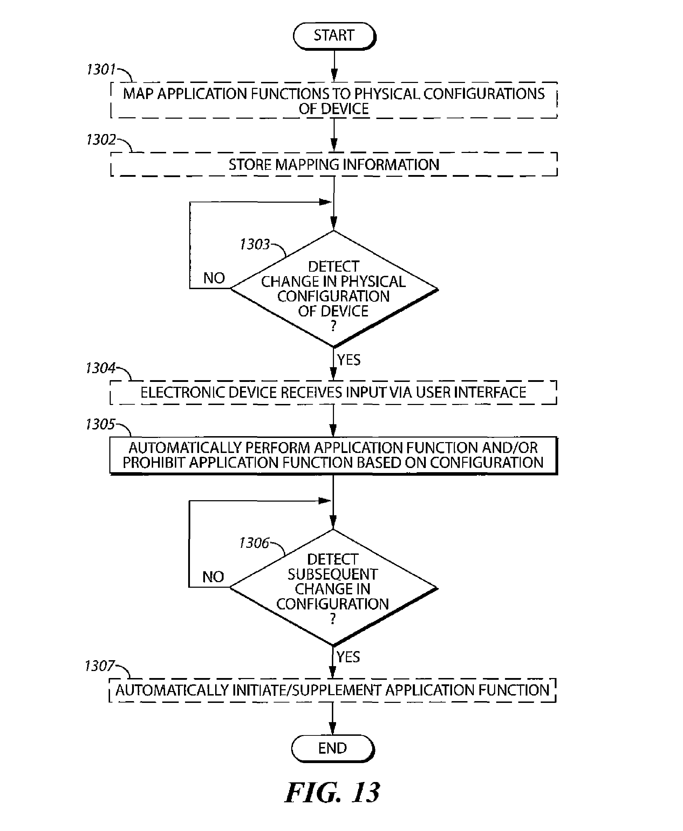

A flow diagram illustrating a method of changing application functionality based on such configuration information is shown in FIG. 13. The method is performed by an electronic device 100 that is a portable electronic device in this example. The method may be carried out at least in part by software executed, for example, by the processor 1002. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

Pursuant to this example application functions are mapped 1301 to physical configurations of the electronic device 100. For example, such information may be default information or information entered into the electronic device 100 via an appropriate user interface, such as via menu entry, in response to a prompt, and so forth, or any combination thereof. Information including one or more application functions mapped to corresponding physical configurations of the electronic device may be entered during set-up of the electronic device or at any other time. The electronic device may receive the information via user input and the information may be stored in a user profile. This information can supplement, substitute for, or otherwise serve in the absence of default mapping information that might otherwise apply. The mapping information is stored in the electronic device 100, for example, in memory 1010.

The electronic device 100 can optionally store one or more preferences, such as application functions corresponding physical configurations of the electronic device 100, at 1302. In such a case, the particular application function that is automatically performed can be determined by accessing the preferences information.

A change in the physical configuration of the electronic device 100 is detected, at 1303. The electronic device 100 has at least two physical configurations. For example, a native movable component 101 1 can be moved respective to the electronic device 100 between a first physical configuration and a second physical configuration. A first physical configuration may include, for example, when a native component 101 is in a non-deployed position, while a second physical configuration may include when that native component 101 is in a deployed position.

Optionally, the electronic device may detect or receive 1304 input, for example, that occurs when a user asserts or utilizes a user interface, that comprises a part of the electronic device 100 or of the component 101. The user interface may comprise, for example, a physical button, key, or switch, trackpad, optical joystick, trackball, or other navigation device, touch-sensitive display or other touch-sensitive input, sound-activated input device, and so forth. This detection may comprise detecting, for example, that this particular user assertion occurs at least partially simultaneously with the detected change in physical configuration. This detection might also comprise detecting that the assertion occurs prior to, or subsequent to, the detected change in physical configuration within, for example, some predetermined period of time, such as 1 second, five seconds, 1 minute, or such other period of time that may be useful in a given application setting.

In response to detecting the change in physical configuration (or optionally, the user assertion) the electronic device 100 automatically performs 1305 an application function. Alternatively, this response can comprise altering, for example, by supplementing, limiting, or even prohibiting present application functionality. For example, when the deployment of the component 101 causes the speaker 1028 and microphone 1030 to be accessible in a vertical orientation, the phone application may be opened on the electronic device, such that a virtual keyboard with numbers for dialing a call is displayed. Alternatively, this physical configuration may result in opening a video application when a meeting in the calendar indicates a video conference. In another example, when two components 101 are opened to the sides of the electronic device in a horizontal orientation, game controls may be displayed on the two components 101, and a game interface is displayed on the electronic device 100. Alternatively, this configuration may result in an email application opening when an email is received by the electronic device 100. As one example, such an alteration of present application functionality can comprise, at least in part, automatically moving at least a portion of the application's user interface from the electronic device 100 to the component 101 (or vice versa).

These teachings readily accommodate other influences and factors as well. For example, as noted earlier, the electronic device 100 can include one or more sensors 601 that can detect, for example, a particular orientation of the electronic device 100. In this case, the application function that is automatically initiated, changed, or prohibited can optionally or additionally be determined based, at least in part, on the detected orientation of the electronic device 100.

As another example, the action of responsively performing an application function can be undertaken following expiration of at least a predetermined amount of time (such as, for example, 1 second, 5 seconds, or some other relevant duration of time) following detection of the change in physical configuration. This time-based condition can help to assure, for example, that a presently-detected physical configuration is not merely a transitory configuration while the user moves the movable component 101 to a final physical configuration.

Application functionality may be automatically performed in response to detecting a particular physical configuration of the electronic device with respect to a native movable component. Optionally, automatically prohibiting 1305 a particular application function of the electronic device 100 may be performed, at least in part, based on the detected physical configuration of the electronic device 100. In an example where the configuration does not deploy the speaker 1028, opening of a media player or phone application may be prohibited. Optionally, a prompt may be provided to a user when application functionality is prohibited, including, for example, information regarding a configuration change that would permit opening of the application.

The electronic device 100 can automatically provide new functionality upon detecting a change in the physical configuration of the electronic device 100. Such an approach can be optionally supplemented by detecting 1306 a subsequent change in the physical configuration of the electronic device 100 and responsively automatically 1307 initiating, supplementing, limiting, or prohibiting another application function of the electronic device 100.

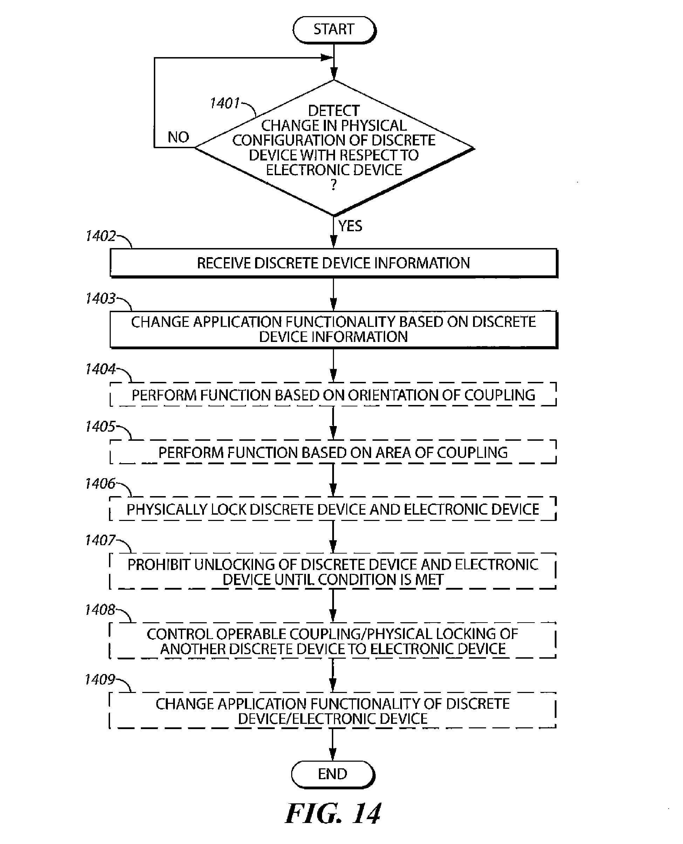

A flow diagram illustrating a method of changing application functionality based on the configuration of an electronic device and a discrete device appears in FIG. 14. The discrete device is a physically discrete or separate movable component 101 that may be, for example, a plug-in physical or virtual keyboard, a touch-sensitive display, a navigation device such as an optical trackpad or joystick, and so forth.

The method is performed by an electronic device 100that is a portable electronic device in this example. The method may be carried out at least in part by software executed, for example, by the processor 1002. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

A change in physical configuration of a discrete device with respect to an electronic device 100 is detected 1401. Detection can comprise, for example, detecting movement of the discrete device with respect to the electronic device, detecting the orientation of a physical coupling of the discrete device to the electronic device, detecting an area of operable coupling between the discrete device and the electronic device, such as which side, or where along a particular side, of the electronic device the discrete device is presently proximal, and so forth.

Application functionality of the electronic device 100 is changed 1403 based, at least in part, on information received 1402 by the electronic device 100 from the discrete device. This information can comprise, for example, the aforementioned unique identification code. Such a code, depending upon the needs of the particular application setting, can uniquely identify the discrete device with respect to other discrete devices or can identify the discrete device as belonging to a unique class, group, or category of discrete devices, such as comprising a particular type of display, audio transducer, keyboard, and so forth.

This change can further comprise changing the application functionality based on such information as may have been provided by one or more other discrete devices that are also operably coupled to the electronic device 100. Change in application functionality may more advantageously leverage, for example, the relative capabilities of all of the discrete devices that are presently operably coupled to the electronic device 100. For example, this change of application functionality can comprise running, simultaneously on both the electronic device 100 and the discrete device, an application that runs unitarily on both devices or in coordination on both devices, where the operation of the application is shared. For example, one device may control display of information while the other device receives and interprets input from both devices.

The detected change in physical configuration can optionally comprise, at least in part, detecting an orientation of the discrete device with respect to the electronic device and performing 1404 a function, e.g., via the electronic device 100, based on that detected orientation.

An area of coupling between the devices may be accounted for when performing a function. The area of coupling may include, for example, identification of a side of one device that is coupled to a side of the other electronic device, identification of a corner of one device coupling with a corner or side of the other electronic device, and so forth. In cases where detecting the change in physical configuration takes into account detecting an area of operable coupling between the discrete device and the electronic device 100, a function is performed 1405 based on the detected area of operable coupling.

As mentioned earlier, the electronic device 100 can be configured with a lock 1101 to facilitate physically locking the discrete device to the electronic device 100. In such a case, the discrete device may be locked 1406 to the electronic device in response to detecting the change in physical configuration, which locking may occur automatically upon detecting.

Optionally, prohibiting physical unlocking 1407 of the discrete device may be engaged, for example, until at least one predetermined condition is met. This predetermined condition might comprise, for example, concluding a particular process by the electronic device 100, such as logically decoupling the electronic device 100 from the component 101, completing an electronic exchange of data between the electronic device 100 and the discrete device, and so forth. This capability can further include automatically unlocking the discrete device from the electronic device 100 when the at least one predetermined condition is met.

More than one discrete device may be coupled to a single electronic device 100. In such a case, and where locking and unlocking capabilities are available, controlling 1408 the operable coupling of one or more discrete devices to the electronic device 100, which may optionally be controlled automatically. Controlling 1408 the physical locking of one or more of these discrete devices to the electronic device 100 can be based upon the detected physical configuration. This ability to prevent unlocking can serve, for example, to prohibit removing a given discrete device that is useful or critical to the present functionality of the electronic device 100. Locking and unlocking may also be applied to the logical coupling between one or more discrete devices and the electronic device 100.

These teachings also accommodate using a locking capability to prevent a given component 101 from becoming physically attached to the electronic device 100. For example, an unknown or un-trusted component can be prevented from attaching to the electronic device 100 physically, logically, or both. A component 101 that is inadequately resourced or provisioned to carry out a necessary functionality, e.g., inadequate memory or processor speed, may be prevented from attaching.

As described above, the detected change in physical configuration serves to effect an automatic change in the application functionality of the electronic device 100. Optionally, response to the detection of a change in physical configuration by automatically changing 1409 application functionality of at least one of one or more discrete devices and the electronic device may be provided.

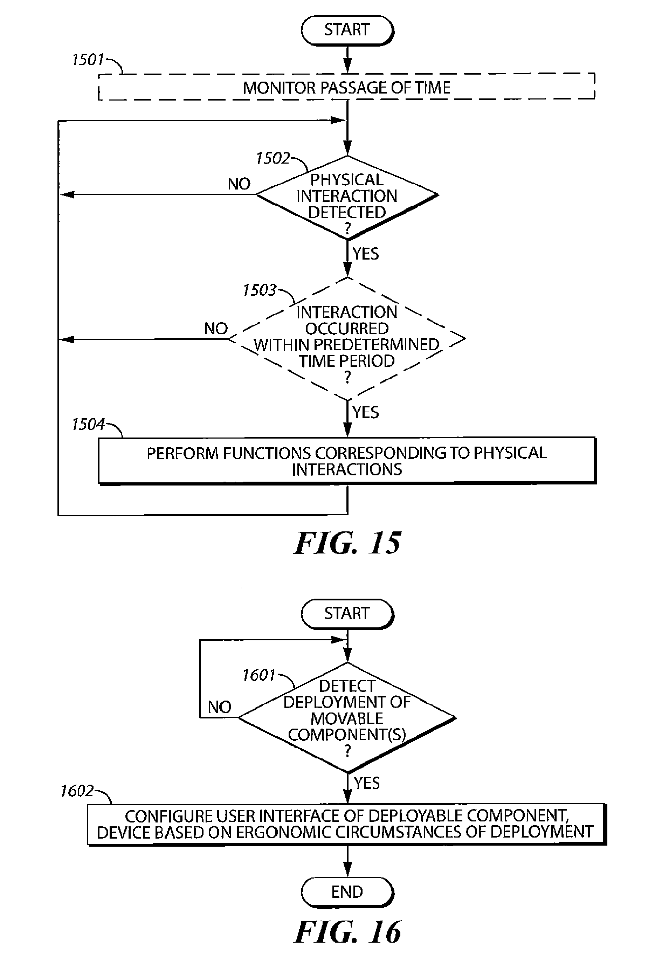

A flow diagram illustrating a method of performing functions in response to physical interactions between devices is shown in FIG. 15. The devices may be an electronic device 100 and one or more physically discrete or separate movable components 101 such as described above. The method is performed by an electronic device 100 that is a portable electronic device in this example and optionally the discrete device. The method may be carried out at least in part by software executed, for example, by the processor 1002. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

Passage of time is optionally monitored 1501 throughout the process. Monitoring may comprise, for example, monitoring the passage of time in general. Monitoring may alternatively comprise, for example, determining an amount of time that passes subsequent to first detecting, or confirmation of detection of the start or completion of a physical interaction, or determining a time of continuous movement between the devices.

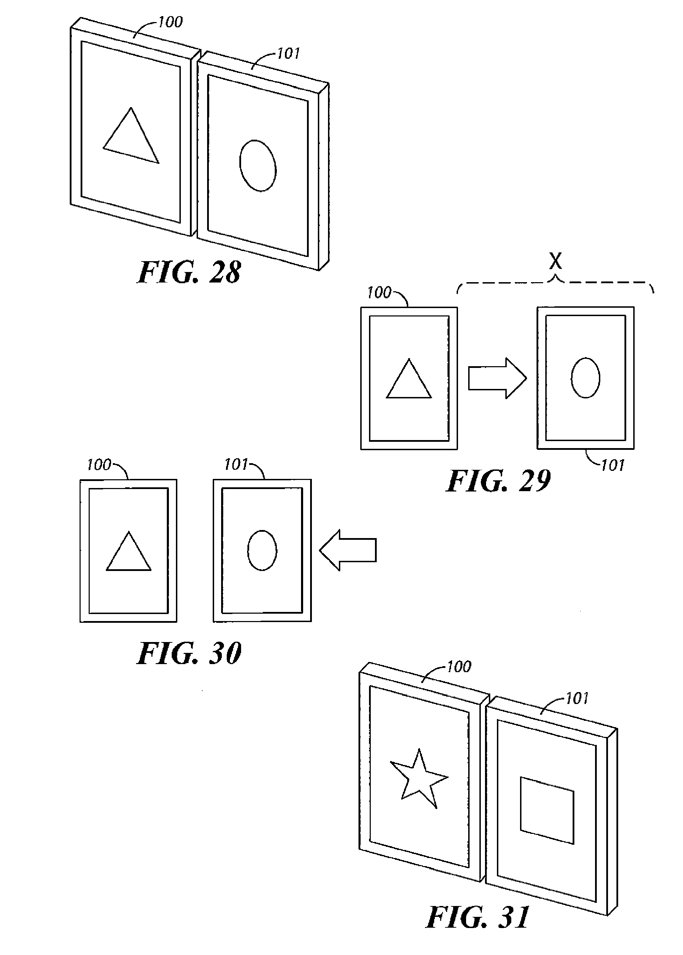

A physical interaction can be detected 1502 between a first device, e.g., the movable component 101, and a second device, e.g., the electronic device 100, where the two devices are logically coupled to one another. The physical interaction comprises one of a plurality of physical interactions that involve movement of at least one of the first and second device with respect to one another. Examples include sliding the devices along adjacent sides, tapping the devices together, rotating one device with respect to the other in the same plane or different planes, placing the devices face to face, e.g., display to display, and so forth. Any suitable number of interactions may be successfully utilized, including one or more interactions, which may be provided in series, in parallel, or any combination thereof. See FIG. 28 through FIG. 43 for illustrated examples.

In the case when the electronic device 100 monitors time, whether the physical interaction occurs within a predetermined period of time is optionally determined 1503. In the case where the detected physical interaction comprises a series of physical interactions, this determination can comprise, for example, determining whether these different relative positions are each sequentially detected within a predetermined period of time of one another. In some examples, monitoring time may comprise the monitoring of the amount of time spent between physical interactions and/or monitoring the amount of time spent on each physical interaction.

One or more functions are performed 1504, for example, automatically or in response to the detecting, by the electronic device 100 and/or the discrete device that participates in the physical interaction.

For example, as when the detected physical interaction is a lateral movement of a display-providing movable component 101 along a side edge of a display-providing electronic device 100, the performance of a function can comprise, for example, compensating a display of information on the movable component 101 to account for a physical misalignment between the movable component 101 and the electronic device 100.

Such an electronic device 100 can be configured to functionally respond to a series of movements between the electronic device 100 and one or more movable devices 101 that may be native to, or discrete from, the electronic device 100. This ability to respond to a series of movements facilitates the movable component-based gestures to serve as input, such as functional triggers, for the electronic device 100. Such a capability can offer numerous advantages and opportunities in various application settings.

A flow diagram illustrating a method of detecting deployment of components is shown in FIG. 16. The method is performed by an electronic device 100 that is a portable electronic device in this example. The method may be carried out at least in part by software executed, for example, by the processor 1002. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

The movable components 101 can comprise one or more user interfaces. The movable component 101 is deployable between at least a non-deployed position and a fully-deployed position. The movable component may be engaged in one or more positions between non-deployed and fully deployed. The user interface of the movable component 101 may be at least partially hidden from the view of the person using the electronic device 100 in an ordinary manner when the movable component is in the non-deployed position.

Deployment of the movable component(s) 101 is detected 1601. This detection can comprise, for example, utilizing a sensor 601 as shown in FIG. 11, which may be referred to in this example as a deployment sensor. For example, the deployment sensor 601 may be a proximity sensor that detects the position of the movable component 101, for example, by determining a distance to the movable component 101 from the proximity sensor.

At least one of the first user interface and the device user interface are configured or reconfigured 1602 based, at least in part, on an ergonomic circumstance of deployment of the movable component 101. An ergonomic circumstance includes, but is not limited to, a request, need, or situation to maintain or increase the user's comfort or to maintain or reduce the user's fatigue while using the electronic device 100. Different ergonomic situations include, but are not limited to, standing 2-handed use, sitting 2-handed use, walking left- or right-handed use, and right-handed or left-handed use with one or more movable components deployed.

The method of claim 16 may be applied to one or more movable components 101. Ergonomic situations may be detected by any combination of an accelerometer or other sensor such as a proximity sensor or light sensor to detect movement or how the device 100 is being held; data input, such as touch data including touch shapes or touch history, suggesting use by a single hand; input through a menu or selection option to identify an ergonomic circumstance; and so forth. Selection options may be displayed on the movable component 101 and/or the electronic device 100 to facilitate the ergonomic circumstance, such as nearer to one hand, at an angle, spread along multiple radii in part of a circle, by user profile for the ergonomic circumstance, and so forth.

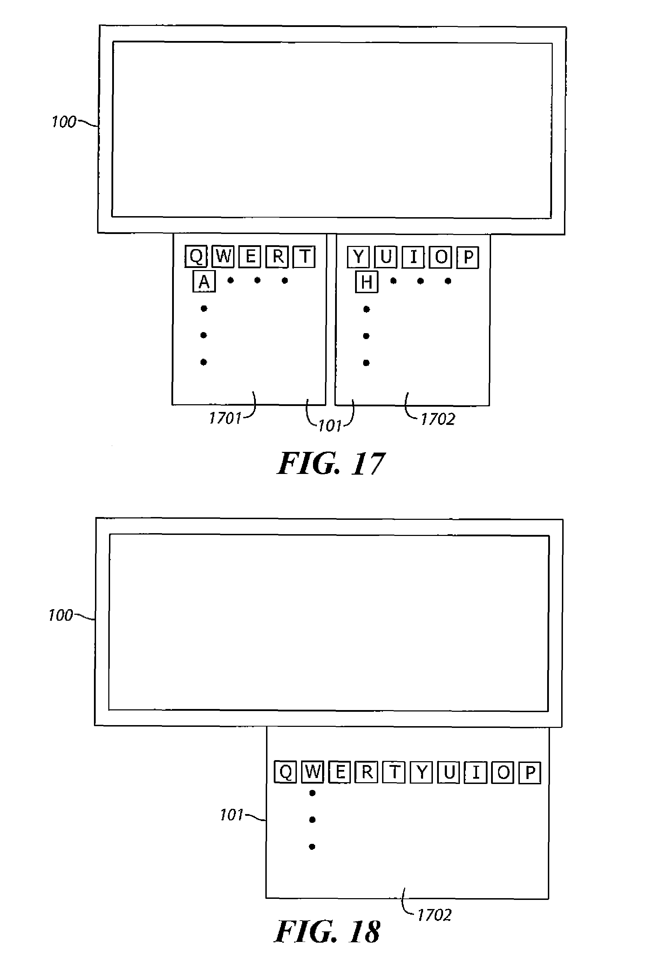

Multiple components 101 may optionally be deployed independently of one another. FIG. 17 and FIG. 18 provide one illustrative example of an ergonomic circumstance. In this example, the electronic device 100 includes two movable components 101. Also in this example both of the movable components 101 include a touch-sensitive display 1018.

In FIG. 17 both of the movable components 101 are fully deployed. In accordance with the present teachings the electronic device 100 accordingly automatically utilizes these two movable components to display, across both components 101, a QWERTY keyboard via the touch-sensitive displays of both components 101. In particular, a first one of the movable components 1701 displays the left-hand side of the QWERTY keyboard while the second movable component 1702 displays the right-hand side of the QWERTY keyboard.

In FIG. 18, the first movable component 1701 is shown in a non-deployed state, leaving only the second movable component 1702 in the deployed position. In this case, the electronic device 100 automatically uses the touch-sensitive display 1018 of the second movable component 1702 to display the complete QWERTY keyboard using, for example, smaller key caps, rather than only one half of the keyboard.

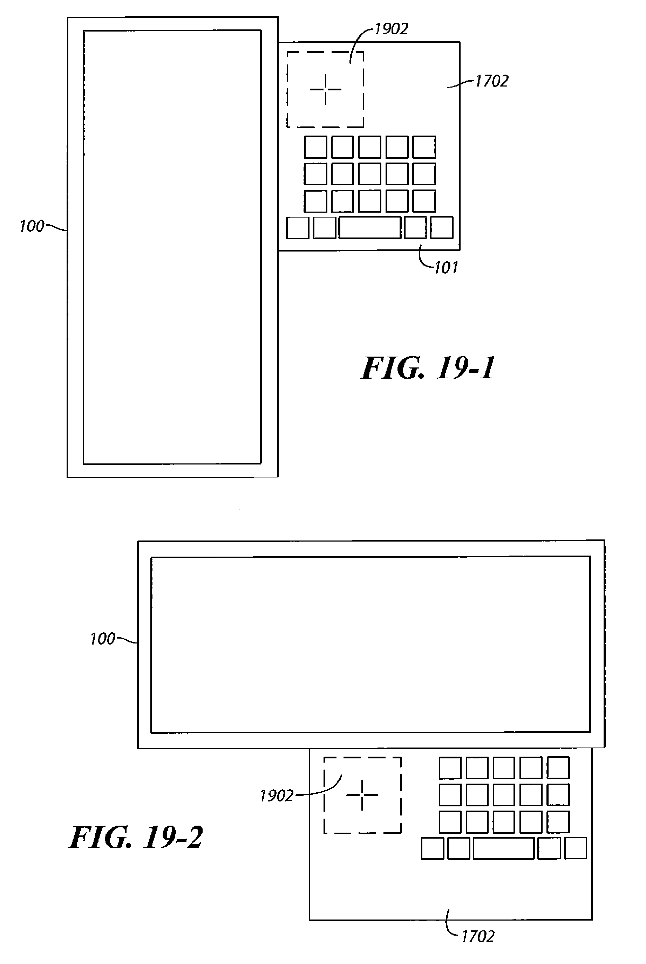

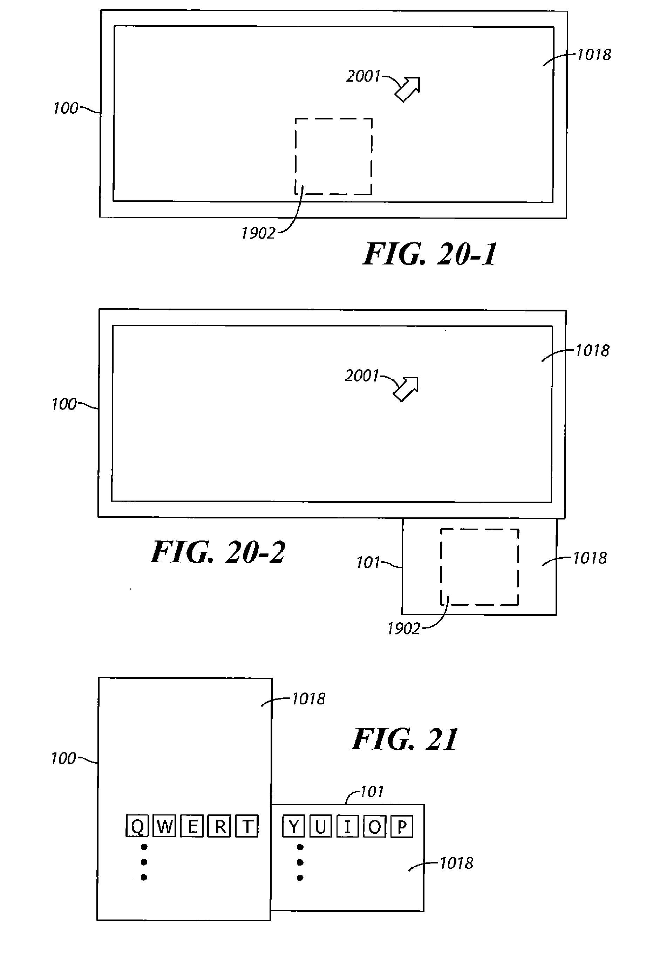

FIGS. 19 and 20 provide more illustrative examples of ergonomic-user cases. In FIG. 19-1 and FIG. 19-2 the movable component 1702 with a touch-sensitive display 1018 and touchpad-based cursor control user interface 1902 is shown in a position deployed by sliding the component 101 out, for example, for a right-handed only use. FIG. 19-1 shows the display of a QWERTY keyboard and touchpad-based cursor control in portrait mode, whereas FIG. 19-2 shows the same component 101 configured in landscape mode. Deploying the left-sided touch-sensitive display 1701 rather than the right-side touch-sensitive display 1702 and using the former to display a QWERTY keyboard in a similar manner can provide a similar configuration more suited for many left-handed users.

With reference to FIG. 20-1, the movable component 101 is withdrawn within the electronic device 100 to a non-deployed position. The electronic device 100 here has a touch-sensitive display 1018 that displays, in part, a cursor 2001 that the user can move about the display in order to make selections and effect other desired actions. To facilitate the making of such movements the touch-sensitive display 1018 has a portion thereof that is demarked and utilized as a touchpad-based cursor-control user interface 1902.

Upon deploying the movable component 101 as shown in FIG. 20-2, the electronic device 100 can take advantage of this opportunity to potentially improve the ergonomics of this operating paradigm by moving the touchpad-based cursor-control user interface 1902 to the touch-sensitive display 1018 of the movable component 101. This move leaves additional room on the display 1018 of the electronic device 100 that can be repurposed in other ways.

In FIG. 21, the movable component 101 is deployed such that the movable component 101 extends outwardly laterally from a first side of the electronic device 100. In this case, the electronic device 100 reacts to this deployment state by utilizing the touch-sensitive display 1018 of the movable component 101 to again present the right-hand side of a QWERTY keyboard (the left-hand side of the keyboard being presented via the electronic device's touch-sensitive display 1018).

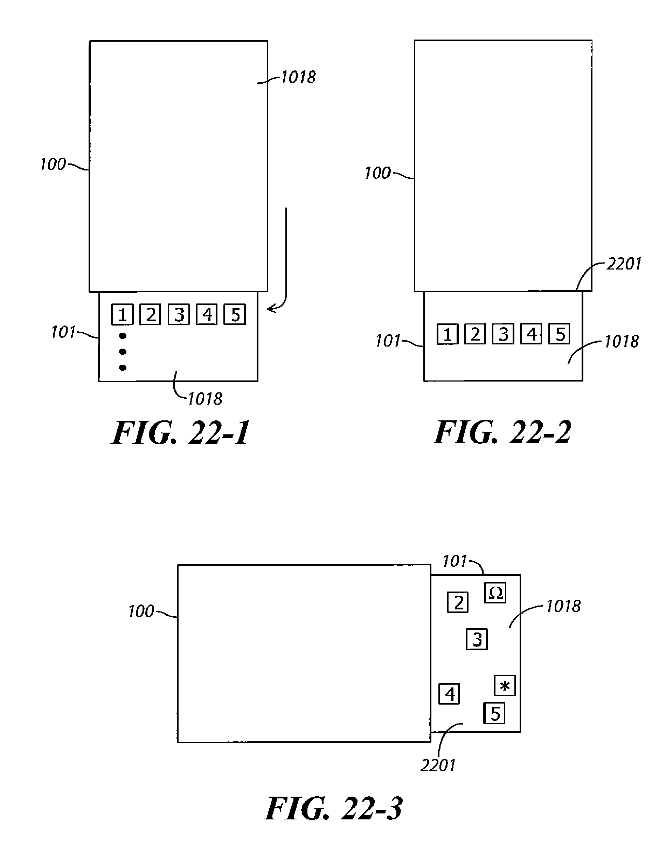

As shown in FIG. 22-1, upon sliding (or rotating or otherwise moving) the movable component 101 to a different side of the electronic device's housing, the electronic device 100 automatically changes the displayed content for at least some of the keys that appear on the movable component's display 1018. In this example, the displayed keys comprise a numeric keyboard rather than an alphabetic keyboard.

FIG. 22-2 and FIG. 22-3 illustrate another example of functional changes as a consequence of a reorientation. In FIG. 22-2 component 101 with touch-sensitive display 1018 is shown combined with an electronic device 100. In this example, the electronic device 100 has a portrait orientation. The component 101 has a landscape orientation and is combined with the electronic device 100 on a bottom edge of the electronic device 100. The edge is referenced with the numeral 2201. In this example, the electronic device reacts to this configuration state and presents a set of virtual buttons organized horizontally in a single row utilizing the component's 101 touch-sensitive display 1018.

In FIG. 22-3, the combined electronic device 100 and component 101 are rotated 90 degrees counter clockwise from the orientation shown in FIG. 22-2. As a result, the electronic device 100 has a landscape orientation whereas FIG. 22-2 shows the electronic device 100 having a portrait orientation. In FIG. 22-3, the component 101 has a portrait orientation whereas FIG. 22-2 shows the component 101 having a landscape orientation. During the rotation, in this example, the component 101 remains combined with the electronic device 100 along the edge 2201. In this example, the electronic device 100 and component 101 remain logically and physically coupled during the rotation.

In this example, the electronic device 100 reacts to the new orientation resulting from the rotation and presents a new set of virtual keys on the component's 101 touch-sensitive display 1018. In FIG. 22-2 there are 5 virtual buttons organized along a horizontal axis whereas in FIG. 22-3 there are 6 virtual buttons organized in a random pattern. In this example, the set of virtual buttons depicted in FIG. 22-3 include some of the virtual buttons depicted in FIG. 22-2 in addition to some new virtual buttons that were added as a result of the rotation and that are not present in FIG. 22-2. Also, in this example some of the virtual buttons in FIG. 22-2 were removed as a consequence of the rotation.

The foregoing example illustrates that changes in the topology of the combined configuration state can lead to changes in functionality and ergonomics. For example functionality can be added or removed depending on the resulting topology. The user interface may be adjusted to improve the ergonomics of the user interface. As another example in these regards, at least initially these sensed circumstances can serve to limit the apparatus to performing a subset of apparatus functions based on the physical configuration. For example, not only might a particular deployed touch-screen display lead to an automatic display of a QWERTY keyboard on that display, initial deployment in those regards might actually cause the apparatus to automatically limit the use of that display to only serving as a QWERTY keyboard for, say, some predetermined period of time notwithstanding that the apparatus could, in principle, accommodate other uses of that display during that time.

Other examples of reorientation exist. For example, the combined electronic device 100 and the component 101 may be separated during the rotation. They may or may not remain logically coupled during the rotation. Also, functional and ergonomic changes may be affected once the reorientation is complete (where the new configuration state remains constant for some predetermined time). Functional and ergonomic changes may occur while the reorientation is ongoing and during the transition from one configuration state to another. For example, the virtual buttons in the provided example may be disabled during rotation preventing their activation during rotation.

In the example provided above the movable component 101 utilized a touch-sensitive display as the primary user interface. These teachings readily accommodate other possibilities, however. For example, the movable component 101 can provide physical keys having key caps that can be selected using, for example, internal illumination, active displays as key caps, or the like. In such a case the same described approach can be applied to facilitate changing the key-cap content based on how the deployable component is deployed at a given time to thereby maintain or improve the ergonomics of using the device.

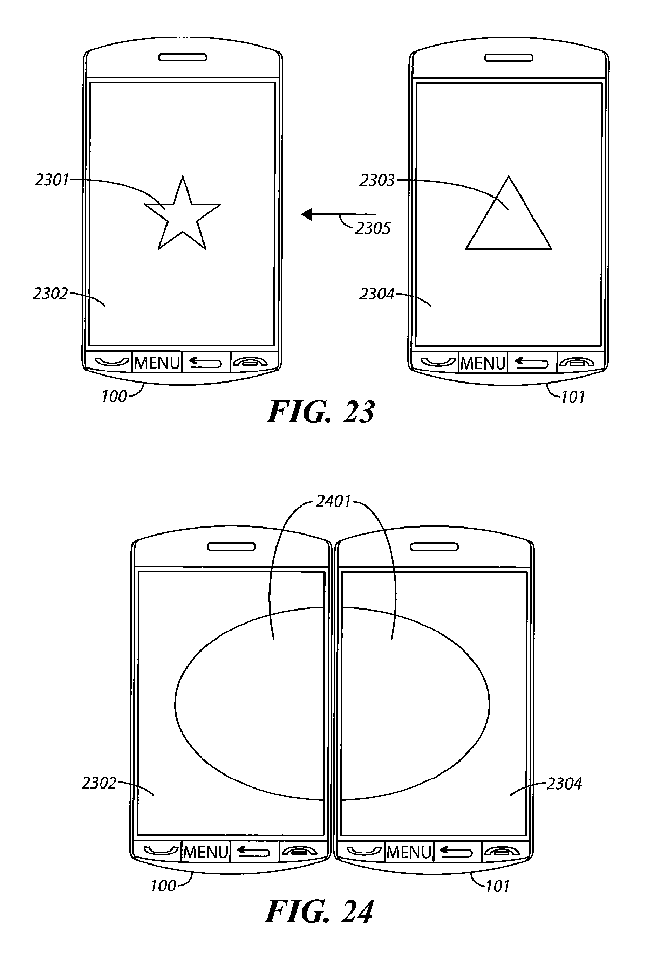

In some situations, the electronic device 100 and the component 101 can be peers to one another, for example, in terms of form factor or general capabilities. FIG. 23 depicts an example where the electronic device 100 and the component 101 each comprise a smartphone. Each smartphone presently operates independently of the other, as illustrated by the star 2301 on the display 2302 of the electronic device 100 and the triangle 2303 on the display 2304 of the component 101. As the two elements 100 and 101 are moved towards one another as indicated by the arrow 2305, the component 101 and the electronic device 100 become sufficiently close to one another to logically couple as described herein. As shown in FIG. 24, when such proximity-based coupling occurs, the electronic device 100 automatically responds by providing altered functionality, illustrated by the oval 2401 displayed across both displays 2302 and 2304.

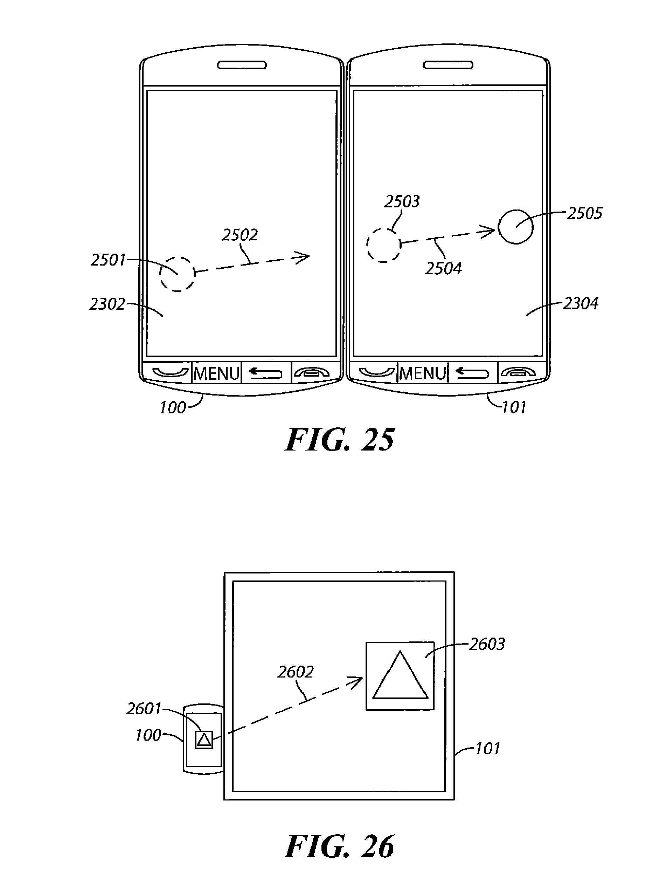

In the example of FIG. 25, a touch in the form of a swipe begins on one display 2302 and continues onto the other display 2304 of these logically-coupled smartphones. For example, a touch is detected on the display 2302 of the electronic device 100 at a starting point 2501 and is further detected as a swipe as the touch moves across the surface of the display 2302 towards the electronic device 101 as indicated by the arrow 2502. Within a predetermined amount of time, and optionally within a predetermined distance of the last touch location on the first electronic device 100, the touch is detected on the display 2304 of the second smartphone 101 at the location denoted by reference numeral 2503.

These logically-coupled smartphones recognize the continuation of the swipe that began on the display 2302 of the first electronic device 100 and continued on the display 2304 of the second electronic device 101. Accordingly, as the swipe continues across the display 2304 of the second electronic device 101, as represented by the arrow 2504, and ends at a concluding point 2505, the two-part swipe can be recognized and treated as a single swipe as though the swipe were accomplished using a single display.

Control of the swipe is handed off or changed, for example, between the processor 1102 of the first device 100 and the processor 1102 of the second device 101 when the touch is continued on the second device 101. One or both processors 1102 may determine that the touch continued from one device 100 to the other device 101. Alternatively, one of the processors 1102 may be selected to process touch data for both devices, for example, when the devices 100, 101 logically couple. Touch data is exchanged between the devices 100, 101 to provide control for the touch input.

FIG. 26 illustrates the leveraging of this two-device swiping capability. In this example the electronic device 100 comprises a smartphone and the component 101 comprises a tablet/pad. The electronic device 100 displays a small image 2601 that a user moves for display on the component 101 by using a two-device swipe 2602 such as described above. In this example, the image 2603 displayed on the component 101 automatically enlarges to take advantage of the relatively larger display space of the component 101. This process can be reversed, when a larger image displayed on the component 101 is dragged to the electronic device 100 by a swipe and automatically reduced in size to better fit the electronic device's smaller display. Thus, an image may be dragged from a touch-sensitive display 1018 of one device 100 to a touch-sensitive display 1018 of another device 101.

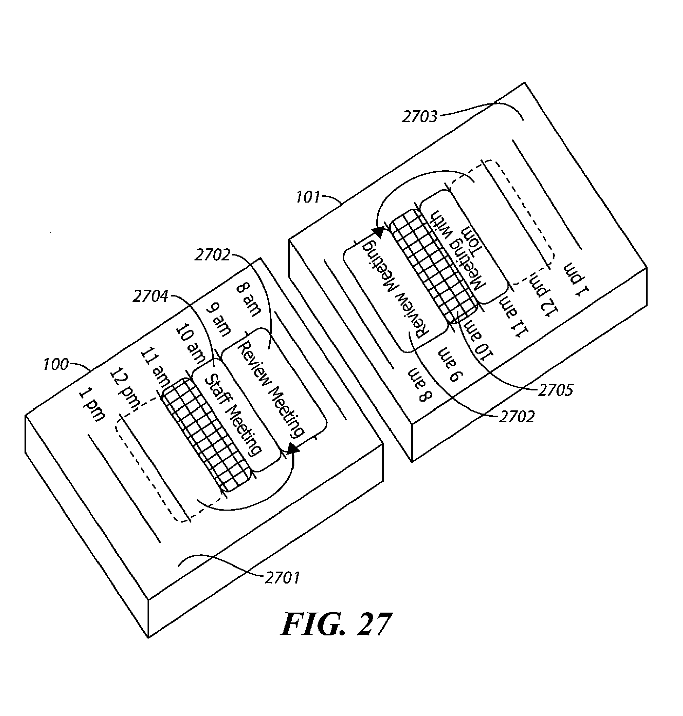

FIG. 27 depicts another example of the flexibility of the present teachings. In this example, both the electronic device 100 and the component 101 comprise tablet computers. The tablets are positioned nearby one another. While in proximity, the tablets logically couple as described herein, and the electronic device 100 also senses the nearby configuration and orientation with the component 101. The electronic device 100 uses this information, and optionally other information received from the component 101, to enter a calendar sharing operation. This sharing includes combining schedule events from two calendars, one stored on the electronic device 100 and the other stored on the component 101, and presenting a single combined calendar schedule, though not necessarily a same view of that combined calendar schedule on the displays of both tablets and reflecting the combined schedule events appropriately on each display.

In this example, a common schedule event 2702 is visible in full details on both displays. Schedule events that are confidential or exclusive to one calendar can be masked. For example, one schedule event 2704 in particular is from the calendar stored on the electronic device 100. That event 2704 is displayed in full detail on the electronic device's 100 display 2701. That schedule event 2704 is masked (as referenced by the numeral 2705), however, on the component's display 2703.

In this example, as a user of the electronic device 100 moves a schedule event 2702 on the electronic device's display 2701, an appropriate reflection of this move automatically appears on the component's display 2703. The move changes the time of the schedule event. The changed time is stored on both calendars; i.e., the one stored on the electronic device 100, and the one stored on the component 101. When the electronic device 100 and the component 101 are separated and logically decoupled, the calendar-sharing operation is terminated, ending the combined calendar view on each display.

These teachings also support device-based gestures that can provide input to the device 100 and/or component 101. FIGS. 28 through 31 illustrate one such example. As shown in FIG. 28, an electronic device 100 and a component 101 are disposed in close physical proximity to one another and are logically coupled. FIG. 29 and FIG. 30 illustrate these two devices 100, 101 as separated and subsequently returned to close physical proximity to one another. This separation-and-return action serves as a gesture that the electronic device 100 and/or the component 101 recognize and that causes one or both such devices 100 and 101 to perform a function or assume new (or supplemental) functionality, such as illustrated in FIG. 31. Recognition of a specific gesture may rely, at least in part, upon the distance of the movement apart from one another (denoted in FIG. 29 by "X") and/or completing the gesture within some predetermined period of time, such as one or two seconds.

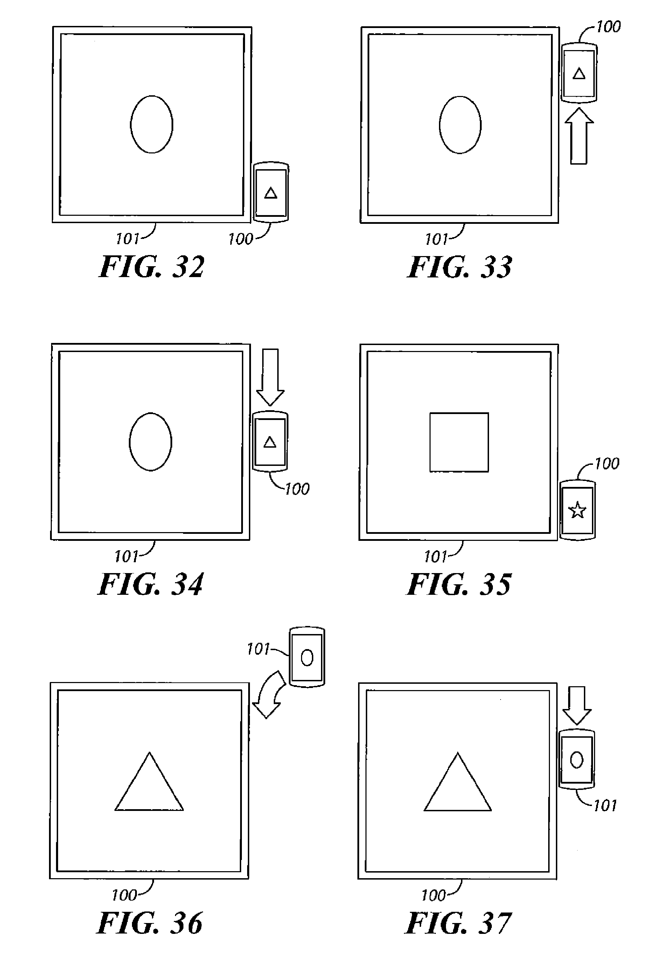

FIGS. 32 through 35 illustrate another example of a gesture. In this example, the electronic device 100 and the component 101 are physically proximal to one another and logically coupled to one another as shown in FIG. 32. As shown in FIG. 33 and FIG. 34, the electronic device 100 is moved along an edge of the component 101 to form a gesture, e.g., back and forth along the edge of the component. As shown in FIG. 35, although the two devices 100, 101 present the same physical formation as before the gesture, one or both of these devices 100, 101 now have new (or at least modified) functionality based upon that gesture. Alternatively, the gesture may provide other input to the devices 100, 101, such as transferring information between the devices 100, 101, scrolling through information on one of the devices, changing the displayed information, and so forth.

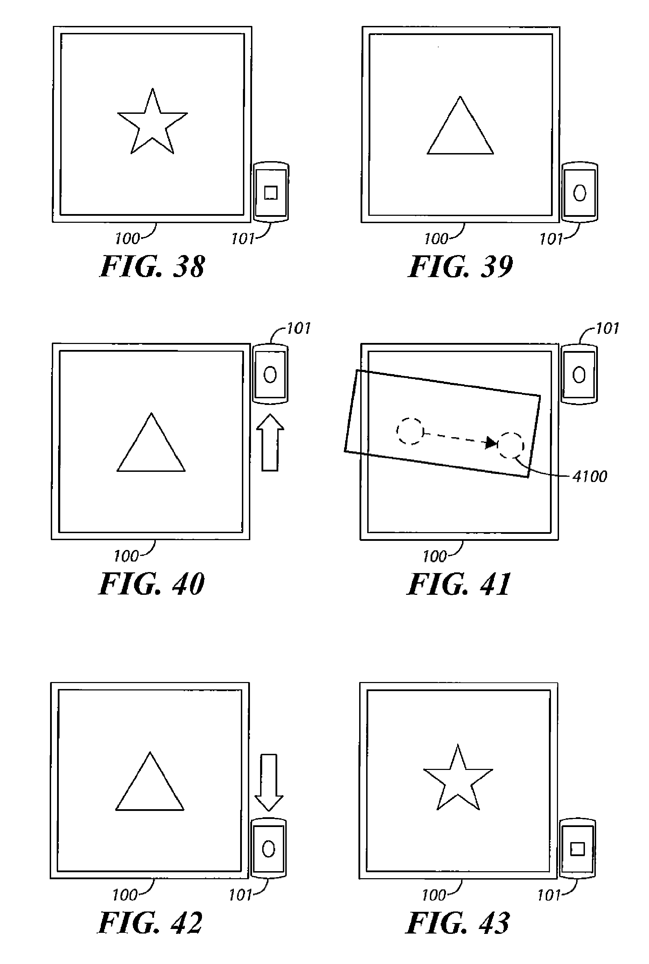

FIGS. 36 through 38 illustrate that the initial physical/logical connection between the electronic device 100 and the component 101 can include such a gesture. In the illustrated example, the component 101 reaches a place of rest (shown in FIG. 38) by sliding along one edge of the electronic device 100. The component 101 sliding along this edge is recognized as a gesture that provides an input, for example changing functionality, performing a function, and so forth.

FIGS. 39 through 43 illustrate that such gestures can be combined with touch-based gestures. In this example, the component 101 slides along one edge of the electronic device 100 (FIG. 39 and FIG. 40) and a swipe from one location to another location 4100 across the touch-sensitive display of the electronic component 101 (FIG. 41) is detected. The component 101 then slides back along the electronic device's edge (FIG. 42), e.g., the component 101 is detected as returned to its starting position or a position near the starting position (FIG. 43). This entire sequence of events serves as a multi-modality gesture that provides input that may, for example, change the functionality such as described above.

The meaning (and/or recognition) of a given gesture may optionally be further specified by the timing of the various movements that are involved with the gesture. For example, two gestures that otherwise appear identical can have different meanings depending upon how long a time the user takes to complete parts or all of the gesture.

These teachings can be employed in a wide variety of application settings and with a myriad of device/component configurations. These teachings are highly scalable and can be employed with a great number and type of devices and movable components as well as an essentially unlimited number of user interfaces, degrees of motion, orientation and deployment configurations, and so forth.

Deploying components based on ergonomic circumstance and configuring a user interface based at least in part on the ergonomic circumstance helps reduce user wear and fatigue. When an electronic device, such as a portable communication device, moves a component of the device in response to detection of a trigger event, a user is provided quicker and automatic access to the elements of the device to handle the trigger event, such as opening or deploying components with a speaker and microphone when a phone call is received. Suitability of such movement may be determined prior to and/or during movement to inhibit movement or further movement to prevent damage or breakage of the device and its movable elements.

Application functions may be performed or functionality modified, including launching applications and providing various user interfaces, upon detection of or in response to a physical configuration of an electronic device, including configuration of native components of the device and physical or logical coupling with another discrete device such as another peer device or accessory such as a keyboard. Application functionality may be changed and/or input provided to the devices in response to detecting a physical configuration of a discrete device with respect to an electronic device, thereby providing a user with a more flexible interface when multiple devices are utilized.

One or more physical interactions between devices, such as movement of one device with respect to another device, provide input to the devices as well as coordination of functionality, including display of information and operation of applications among one or more devices. Such coordination and operation occurs automatically to provide faster and more flexible operation. A user may be provided with the ability to store preferences for the above features in a user profile or to engage a feature manually, e.g., through a menu or selection option.

Those skilled in the art recognize that a wide variety of modifications, alterations, and combinations can be made with respect to the above described embodiments without departing from the spirit and scope of the disclosed concept, and that such modifications, alterations, and combinations are to be viewed as being within the ambit of the disclosed concept.

## Claims

1. A method of operating a portable communication device (100), the method comprising:
detecting (1201) a trigger event;
the method being **characterized by**:
in response to detecting the trigger event, automatically moving (1203) at least one component (101) that comprises a part of the portable communication device.

2. The method of claim 1, further **characterized in that** automatically moving at least one component comprises moving the component via articulation.

3. The method of claim 1, further **characterized in that** the at least one component comprises a user interface.

4. The method of claim 1, further **characterized by**:
determining a suitability to automatically move the component.

5. The method of claim 4 further **characterized by**:
refraining from moving the component when such movement is not suitable at a time of determining the suitability.

6. The method of claim 4, further **characterized in that** determining suitability occurs prior to automatically moving the component.

7. The method of claim 4, further **characterized in that** determining suitability occurs while automatically moving the component.

8. The method of claim 1, further **characterized in that** the trigger event comprises a received wireless communication.

9. The method of claim 1, further **characterized in that** the trigger event is a time-based event.

10. The method of claim 1, further **characterized by**:
automatically changing application functionality of the portable communication device as a function of having moved the component.

11. The method of claim 1 further **characterized in that** automatically moving at least one component comprises automatically moving the at least one component back to a previously-occupied position.

12. The method of claim 1, further **characterized in that** the component comprises at least one of:
a battery cover;
a housing;
a memory card cover.

13. The method of claim 1, further **characterized by**:
automatically determining a suitability to automatically move the component; and
refraining from moving the component when such movement is not suitable.

14. An apparatus **characterized in that** it is configured to carry out a method in conformance with any one of claims 1 through 11.

15. The apparatus of claim 14 further **characterized in that** the apparatus comprises a portable communication device.

## Amended claims

### Amended claims in accordance with Rule 137(2) EPC.

**1.** A method of operating a portable communication device (100), the method comprising:
detecting (1201) a trigger event;
the method being **characterized by**:
in response to detecting the trigger event, automatically moving (1203) at least one component (101) that comprises a part of the portable communication device (100); and
automatically changing (1204) application functionality of the portable communication device (100) as a function of the automatic moving of the at least one component (101).

**2.** The method of claim 1, further **characterized in that** automatically moving the at least one component (101) comprises moving the at least one component (101) via articulation.

**3.** The method of claim 1, further **characterized in that** the at least one component (101) comprises a user interface.

**4.** The method of claim 1, further **characterized by**:
using one or more sensors (601) of the device (100) to detect one or more states of the device (100), thereby determining a suitability to automatically move the at least one component (101).

**5.** The method of claim 4 further **characterized by**:
refraining from moving the at least one component (101) when such movement is not suitable at a time of determining the suitability.

**6.** The method of claim 4, further **characterized in that** determining suitability occurs prior to automatically moving the at least one component (101).

**7.** The method of claim 4, further **characterized in that** determining suitability occurs while automatically moving the at least one component (101).

**8.** The method of claim 1, further **characterized in that** the trigger event comprises a received wireless communication.

**9.** The method of claim 1, further **characterized in that** the trigger event is a time-based event.

**10.** The method of claim 1 further **characterized in that** automatically moving the at least one component (101) comprises automatically moving the at least one component (101) back to a previously-occupied position.

**11.** The method of claim 1, further **characterized in that** the at least one component (101) comprises at least one of:
a battery cover;
a housing;
a memory card cover.

**12.** The method of claim 1, further **characterized by**:
using one or more sensors (601) of the device (100) to detect one or more states of the device (100), thereby automatically determining a suitability to automatically move the at least one component (101); and
refraining from moving the at least one component (101) when such movement is not suitable.

**13.** An apparatus **characterized in that** it is configured to carry out a method in conformance with any one of claims 1 through 12.

**14.** The apparatus of claim 13 further **characterized in that** the apparatus comprises a portable communication device (100).
